(19) **Europäisches Patentamt / European Patent Office / Office européen des brevets**

(11) **EP 4 618 435 A1**

(12) **EUROPEAN PATENT APPLICATION**
published in accordance with Art. 153(4) EPC

(43) Date of publication:
**17.09.2025 Bulletin 2025/38**

(21) Application number: **23893787.4**

(22) Date of filing: **20.11.2023**

(51) International Patent Classification (IPC):
**H04B 7/06** (2006.01)    **H04W 16/28** (2009.01)

(52) Cooperative Patent Classification (CPC):
**H04B 7/06; H04B 7/08; H04W 16/28**

(86) International application number:
**PCT/CN2023/132673**

(87) International publication number:
**WO 2024/109697 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.11.2022 CN 202211457120**

(71) Applicant: **Huawei Technologies Co., Ltd.
Shenzhen, Guangdong 518129 (CN)**

(72) Inventors:
• **HOU, Yuefeng
  Shenzhen, Guangdong 518129 (CN)**
• **GAO, Xinyu
  Shenzhen, Guangdong 518129 (CN)**
• **HU, Chen
  Shenzhen, Guangdong 518129 (CN)**
• **LIU, Kunpeng
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **BEAM GENERATION METHOD AND COMMUNICATION APPARATUS**

(57)    This application provides a beam generation method and a communication apparatus. The method can be applied to the beam generation field. The method includes: A first network device sends first configuration information to a second network device. The first configuration information is used to configure a beam parameter of the second network device, the beam parameter includes at least one peak parameter, and each of the at least one peak parameter includes at least one of a peak angle and a peak width. The second network device generates, based on the first configuration information, a beam having the beam parameter feature. In this way, this application supports the second network device in performing beam generation based on configuration information sent by the first network device, to extend a beam generation manner of the second network device.

FIG. 2

## Description

This application claims priority to Chinese Patent Application No. 202211457120.5, filed with the China National Intellectual Property Administration on November 21, 2022 and entitled "BEAM GENERATION METHOD AND COMMUNICATION APPARATUS", which is incorporated herein by reference in its entirety.

## TECHNICAL FIELD

This application relates to the field of communication technologies, and more specifically, to a beam generation method and a communication apparatus.

## BACKGROUND

An intelligent reflecting surface (intelligent reflecting surface, IRS) integrates a large quantity of low-cost and low-power-consumption passive reflecting components on a plane, to intelligently reconfigure a radio propagation environment, so that performance of a wireless communication network can be significantly improved.

The IRS may be considered as an extension of a network device, and is configured to assist in communication between the network device and a terminal device. The IRS is deployed in a communication coverage hole between the network device and the terminal device, so that a coverage rate of the communication coverage hole can be effectively improved. Because the communication coverage hole between the network device and the terminal device is scattered, wide-range coverage cannot be performed on the communication coverage hole between the network device and the terminal device in a narrow beam generation manner of the IRS. In other words, the existing beam generation manner of the IRS cannot meet a requirement of the IRS on assisting in communication between the network device and the terminal device.

Therefore, how to extend the beam generation manner of the IRS is an urgent technical problem to be resolved currently.

## SUMMARY

This application provides a beam generation method and a communication apparatus, to extend a beam generation manner of a second network device (including an IRS).

According to a first aspect, a beam generation method is provided. The method is applied to a first network device side. The method includes: determining first configuration information, where the first configuration information is used to configure a beam parameter of a second network device, the beam parameter includes at least one peak parameter, and a first peak parameter in the at least one peak parameter includes at least one of a peak angle and a peak width; and sending the first configuration information to the second network device.

It should be understood that the foregoing method may be performed by a first network device, or may be performed by a module and/or a component (for example, a chip or an integrated circuit) that are/is mounted in the first network device and that have/has a corresponding function. This is not limited in this embodiment of this application.

Specifically, the second network device performs beam generation based on the first configuration information sent by the first network device. In this way, a beam generation manner of the second network device can be extended.

Specifically, when the second network device is an IRS, the first network device sends a plurality of peak parameters to the IRS, and the IRS may generate a beam with a plurality of peaks. This can help the IRS better cover a communication coverage hole between a network device 110 and a terminal device 120 (increase a coverage rate). Alternatively, the first network device sends, to the IRS, a peak width parameter indicating a larger beam width, and the IRS generates a beam with the larger beam width based on the peak width parameter. This can also help the IRS better cover a communication coverage hole between a network device 110 and a terminal device 120 (increase a coverage rate).

In a possible implementation, an antenna array of the second network device includes at least one antenna subarray. The first peak parameter corresponds to the antenna array. Alternatively, the first peak parameter corresponds to a first antenna subarray in the at least one antenna subarray.

Specifically, when the first peak parameter corresponds to the first antenna subarray, the second network device generates a corresponding peak parameter by using some antenna elements. In this way, overheads can be reduced. When the first peak parameter corresponds to the antenna array, the second network device generates a corresponding peak parameter by using all antenna elements. In this way, a beam with better performance can be generated.

In a possible implementation, the first peak parameter corresponds to the antenna array, and the first configuration information includes at least one of the following: a peak angle in each peak parameter, a peak width in each peak parameter, a first weight matrix, or a first codeword. The first weight matrix is used to generate the at least one peak parameter, and the first codeword is used to generate the first weight matrix.

**EP 4 618 435 A1**

When the first configuration information includes at least one of the peak angle and the peak width, the second network device directly performs beam generation based on the parameter. When the first configuration information includes the first weight matrix or the first codeword, the second network device generates the at least one peak parameter based on the first weight matrix or the first codeword, to generate a corresponding beam. In this way, signaling overheads can be reduced.

In a possible implementation, a dimension of the first weight matrix is M×N, M is a quantity of rows of the antenna array, and N is a quantity of columns of the antenna array. A first weight element of the first weight matrix corresponds to a first antenna element of the antenna array.

In this way, each antenna element may correspond to one weight element of the first weight matrix.

In a possible implementation, the first peak parameter corresponds to the first antenna subarray, and the first configuration information includes at least one of the following: a first peak angle in the first peak parameter, a first peak width in the first peak parameter, a second weight matrix, or a second codeword. The second weight matrix is used to generate the first peak parameter, and the second codeword is used to generate the second weight matrix.

When the first configuration information includes at least one of the peak angle and the peak width, the second network device may directly perform beam generation based on the parameter. When the first configuration information includes the second weight matrix or the second codeword, the second network device generates the first peak parameter based on the second weight matrix or the second codeword, to generate a corresponding beam. In this way, signaling overheads can be reduced.

In a possible implementation, a dimension of the second weight matrix is P×Q, P is a quantity of rows of the first antenna subarray, and Q is a quantity of columns of the first antenna subarray. A second weight element of the second weight matrix corresponds to a second antenna element of the first antenna subarray.

In a possible implementation, the second weight matrix includes a third weight matrix and a fourth weight matrix, the third weight matrix is used to generate the first peak angle, and the fourth weight matrix is used to generate the first peak width. A dimension of the third weight matrix, a dimension of the fourth weight matrix, and a dimension of a second weight are the same.

The second weight is decomposed into a third weight and a fourth weight that have a same dimension, so that the peak angle and the peak width can be independently adjusted. This can improve flexibility of weight design and weight information delivery.

In a possible implementation, a Hadamard product between the third weight matrix and the fourth weight matrix is the second weight matrix.

In a possible implementation, the second codeword includes at least one of the following: a first horizontal angle coefficient, a first horizontal broadening coefficient, a second horizontal broadening coefficient, a first vertical angle coefficient, a first vertical broadening coefficient, or a second vertical broadening coefficient.

In this way, in a horizontal direction or a vertical direction, a beam with a specific peak angle or a beam with a specific peak width can be generated by using a small quantity of weight coefficients, so that signaling overheads can be reduced.

In a possible implementation, the third weight matrix, the first horizontal angle coefficient, and the first vertical angle coefficient satisfy: $W_3 = e^{j(A_x \times \mathbf{n_x})} \otimes e^{j(A_y \times \mathbf{n_y})}$. $W_3$ is the third weight matrix, $A_x$ is the first horizontal angle coefficient, $A_y$ is the first vertical angle coefficient, and $\otimes$ is a Kronecker product. $\mathbf{n_x}$ indicates an antenna element index vector of the first antenna subarray in the horizontal direction, and $\mathbf{n_x} = 0, 1, \ldots, N_x - 1$. $\mathbf{n_y}$ indicates an antenna element index vector of the first antenna subarray in the vertical direction, and $\mathbf{n_y} = 0, 1, \ldots, N_y - 1$. $N_x$ is a quantity of antenna elements of the first antenna subarray in the horizontal direction, and $N_y$ is a quantity of antenna elements of the first antenna subarray in the vertical direction.

It should be understood that $N_x$ and $N_y$ are respectively associated with values of Q and P.

Therefore, in the horizontal direction and the vertical direction, the peak angle can be independently adjusted. This can improve flexibility of weight design and weight delivery.

In a possible implementation, the fourth weight matrix, the first horizontal broadening coefficient, the second horizontal broadening coefficient, the first vertical broadening coefficient, and the second vertical broadening coefficient satisfy:

$$W_4 = e^{j\left|B_x \times (2\mathbf{n_x} - (N_x - 1))/(N_x - 1)\right|^{C_x}} \otimes e^{j\left|B_y \times (2\mathbf{n_y} - (N_y - 1))/(N_y - 1)\right|^{C_y}}$$

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product. $\mathbf{n_x}$ indicates the antenna element index vector of the first antenna subarray in the horizontal direction, and $\mathbf{n_x} = 0, 1, \ldots, N_x - 1$. $\mathbf{n_y}$ indicates the antenna element index vector of the first antenna subarray in the vertical direction, and $\mathbf{n_y} = 0, 1, \ldots, N_y - 1$. $N_x$ is the quantity of antenna elements of the first antenna subarray in the horizontal direction, and $N_y$

3

is the quantity of antenna elements of the first antenna subarray in the vertical direction.

Therefore, in the horizontal direction and the vertical direction, the peak width can be independently adjusted. This improves flexibility of weight design and weight delivery.

In a possible implementation, the first peak parameter corresponds to the first antenna subarray. The method further includes: sending second configuration information to the second network device, where the second configuration information includes at least one of index information and antenna element location information of the first antenna subarray.

In this way, the second network device may determine, based on the index information and/or the antenna element location information, a location of the first antenna subarray corresponding to the first peak parameter, to accurately generate the beam.

In a possible implementation, the method further includes: sending indication information to the second network device, where the indication information indicates that the first peak parameter corresponds to the antenna array, or the indication information indicates that the first peak parameter corresponds to the first antenna subarray.

In this way, the second network device determines a type of a mapping relationship between the first peak parameter and the antenna array, to accurately generate the beam.

According to a second aspect, a beam generation method is provided. The method is applied to a second network device side. The method includes: receiving first configuration information from a first network device, where the first configuration information is used to configure a beam parameter of a second network device, the beam parameter includes at least one peak parameter, and a first peak parameter in the at least one peak parameter includes at least one of a peak angle and a peak width; and generating, based on the first configuration information, a beam having the beam parameter feature.

In a possible implementation, an antenna array of the second network device includes at least one antenna subarray. The first peak parameter corresponds to the antenna array. Alternatively, the first peak parameter corresponds to a first antenna subarray in at least one sub-antenna.

In a possible implementation, the first peak parameter corresponds to the antenna array, and the first configuration information includes at least one of the following: a peak angle in each peak parameter, a peak width in each peak parameter, a first weight matrix, or a first codeword. The first weight matrix is used to generate the at least one peak parameter, and the first codeword is used to generate the first weight matrix.

In a possible implementation, a dimension of the first weight matrix is M×N, M is a quantity of rows of the antenna array, and N is a quantity of columns of the antenna array. A first weight element of the first weight matrix corresponds to a first antenna element of the antenna array.

In a possible implementation, the first peak parameter corresponds to the first antenna subarray, and the first configuration information includes at least one of the following: a first peak angle in the first peak parameter, a first peak width in the first peak parameter, a second weight matrix, or a second codeword. The second weight matrix is used to generate the first peak parameter, and the second codeword is used to generate the second weight matrix.

In a possible implementation, a dimension of the second weight matrix is P×Q, P is a quantity of rows of the first antenna subarray, and Q is a quantity of columns of the first antenna subarray. A second weight element of the second weight matrix corresponds to a second antenna element of the first antenna subarray.

In a possible implementation, the second weight matrix includes a third weight matrix and a fourth weight matrix, the third weight matrix is used to generate the first peak angle, and the fourth weight matrix is used to generate the first peak width. A dimension of the third weight matrix, a dimension of the fourth weight matrix, and a dimension of a second weight are the same.

In a possible implementation, a Hadamard product between the third weight matrix and the fourth weight matrix is the second weight matrix.

In a possible implementation, the second codeword includes at least one of the following: a first horizontal angle coefficient, a first horizontal broadening coefficient, a second horizontal broadening coefficient, a first vertical angle coefficient, a first vertical broadening coefficient, or a second vertical broadening coefficient.

In a possible implementation, the third weight matrix, the first horizontal angle coefficient, and the first vertical angle coefficient satisfy: $W_3 = e^{j(A_x \times \mathbf{n_x})} \otimes e^{j(A_y \times \mathbf{n_y})}$. $W_3$ is the third weight matrix, $A_x$ is the first horizontal angle coefficient, $A_y$ is the first vertical angle coefficient, and $\otimes$ is a Kronecker product. $\mathbf{n_x}$ indicates an antenna element index vector of the first antenna subarray in the horizontal direction, and $\mathbf{n_x} = 0, 1, ..., N_x - 1$. $\mathbf{n_y}$ indicates an antenna element index vector of the first antenna subarray in the vertical direction, and $\mathbf{n_y} = 0, 1, ... , N_y - 1$. $N_x$ is a quantity of antenna elements of the first antenna subarray in the horizontal direction, and $N_y$ is a quantity of antenna elements of the first antenna subarray in the vertical direction.

In a possible implementation, the fourth weight matrix, the first horizontal broadening coefficient, the second horizontal broadening coefficient, the first vertical broadening coefficient, and the second vertical broadening coefficient satisfy:

$$W_4 = e^{j\left|B_x \times (2\mathbf{n_x} - (N_x - 1))/(N_x - 1)\right|^{C_x}} \otimes e^{j\left|B_y \times \left(2\mathbf{n_y} - (N_y - 1)\right)/(N_y - 1)\right|^{C_y}}$$

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product. $\mathbf{n_x}$ indicates the antenna element index vector of the first antenna subarray in the horizontal direction, and $\mathbf{n_x} = 0, 1, ..., N_x - 1$. $\mathbf{n_y}$ indicates the antenna element index vector of the first antenna subarray in the vertical direction, and $\mathbf{n_y} = 0, 1, ..., N_y - 1$. $N_x$ is the quantity of antenna elements of the first antenna subarray in the horizontal direction, and $N_y$ is the quantity of antenna elements of the first antenna subarray in the vertical direction.

In a possible implementation, the first peak parameter corresponds to the first antenna subarray. The method further includes: receiving second configuration information from the first network device, where the second configuration information includes at least one of index information and antenna element location information of the first antenna subarray.

In a possible implementation, the method further includes: receiving indication information from the first network device, where the indication information indicates that the first peak parameter corresponds to the antenna array, or the indication information indicates that the first peak parameter corresponds to the first antenna subarray.

According to a third aspect, a communication apparatus is provided, including: a processing unit, configured to determine first configuration information, where the first configuration information is used to configure a beam parameter of a second network device, the beam parameter includes at least one peak parameter, and a first peak parameter in the at least one peak parameter includes at least one of a peak angle and a peak width; and a transceiver unit, configured to send the first configuration information to the second network device.

In a possible implementation, an antenna array of the second network device includes at least one antenna subarray. The first peak parameter corresponds to the antenna array. Alternatively, the first peak parameter corresponds to a first antenna subarray in the at least one antenna subarray.

In a possible implementation, the first peak parameter corresponds to the antenna array, and the first configuration information includes at least one of the following: a peak angle in each peak parameter, a peak width in each peak parameter, a first weight matrix, or a first codeword. The first weight matrix is used to generate the at least one peak parameter, and the first codeword is used to generate the first weight matrix.

In a possible implementation, a dimension of the first weight matrix is $M \times N$, M is a quantity of rows of the antenna array, and N is a quantity of columns of the antenna array. A first weight element of the first weight matrix corresponds to a first antenna element of the antenna array.

In a possible implementation, the first peak parameter corresponds to the first antenna subarray, and the first configuration information includes at least one of the following: a first peak angle in the first peak parameter, a first peak width in the first peak parameter, a second weight matrix, or a second codeword. The second weight matrix is used to generate the first peak parameter, and the second codeword is used to generate the second weight matrix.

In a possible implementation, a dimension of the second weight matrix is $P \times Q$, P is a quantity of rows of the first antenna subarray, and Q is a quantity of columns of the first antenna subarray. A second weight element of the second weight matrix corresponds to a second antenna element of the first antenna subarray.

In a possible implementation, the second weight matrix includes a third weight matrix and a fourth weight matrix, the third weight matrix is used to generate the first peak angle, and the fourth weight matrix is used to generate the first peak width. A dimension of the third weight matrix, a dimension of the fourth weight matrix, and a dimension of a second weight are the same.

In a possible implementation, a Hadamard product between the third weight matrix and the fourth weight matrix is the second weight matrix.

In a possible implementation, the second codeword includes at least one of the following: a first horizontal angle coefficient, a first horizontal broadening coefficient, a second horizontal broadening coefficient, a first vertical angle coefficient, a first vertical broadening coefficient, or a second vertical broadening coefficient.

In a possible implementation, the third weight matrix, the first horizontal angle coefficient, and the first vertical angle coefficient satisfy: $W_3 = e^{j(A_x \times \mathbf{n_x})} \otimes e^{j(A_y \times \mathbf{n_y})}$. $W_3$ is the third weight matrix, $A_x$ is the first horizontal angle coefficient, $A_y$ is the first vertical angle coefficient, and $\otimes$ is a Kronecker product. $\mathbf{n_x}$ indicates an antenna element index vector of the first antenna subarray in the horizontal direction, and $\mathbf{n_x} = 0, 1, ..., N_x - 1$. $\mathbf{n_y}$ indicates an antenna element index vector of the first antenna subarray in the vertical direction, and $\mathbf{n_y} = 0, 1, ..., N_y - 1$. $N_x$ is a quantity of antenna elements of the first antenna subarray in the horizontal direction, and $N_y$ is a quantity of antenna elements of the first antenna subarray in the vertical direction.

In a possible implementation, the fourth weight matrix, the first horizontal broadening coefficient, the second horizontal broadening coefficient, the first vertical broadening coefficient, and the second vertical broadening coefficient satisfy:

$$W_4 = e^{j \left| B_x \times (2\mathbf{n_x} - (N_x-1))/(N_x-1) \right|^{C_x}} \otimes e^{j \left| B_y \times (2\mathbf{n_y} - (N_y-1))/(N_y-1) \right|^{C_y}}$$

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product. $\mathbf{n_x}$ indicates the antenna element index vector of the first antenna subarray in the horizontal direction, and $\mathbf{n_x} = 0, 1, ..., N_x- 1$. $\mathbf{n_y}$ indicates the antenna element index vector of the first antenna subarray in the vertical direction, and $\mathbf{n_y} = 0, 1, ..., N_y- 1$. $N_x$ is the quantity of antenna elements of the first antenna subarray in the horizontal direction, and $N_y$ is the quantity of antenna elements of the first antenna subarray in the vertical direction.

In a possible implementation, the first peak parameter corresponds to the first antenna subarray. The transceiver unit is further configured to send second configuration information to the second network device, where the second configuration information includes at least one of index information and antenna element location information of the first antenna subarray.

In a possible implementation, the transceiver unit is further configured to send indication information to the second network device, where the indication information indicates that the first peak parameter corresponds to the antenna array, or the indication information indicates that the first peak parameter corresponds to the first antenna subarray.

According to a fourth aspect, a communication apparatus is provided, including: a transceiver unit, configured to receive first configuration information from a first network device, where the first configuration information is used to configure a beam parameter of the communication apparatus, the beam parameter includes at least one peak parameter, and a first peak parameter in the at least one peak parameter includes at least one of a peak angle and a peak width; and a processing unit, configured to generate, based on the first configuration information, a beam having the beam parameter feature.

In a possible implementation, an antenna array of the communication apparatus includes at least one antenna subarray. The first peak parameter corresponds to the antenna array. Alternatively, the first peak parameter corresponds to a first antenna subarray in the at least one antenna subarray.

In a possible implementation, the first peak parameter corresponds to the antenna array, and the first configuration information includes at least one of the following: a peak angle in each peak parameter, a peak width in each peak parameter, a first weight matrix, or a first codeword. The first weight matrix is used to generate the at least one peak parameter, and the first codeword is used to generate the first weight matrix.

In a possible implementation, a dimension of the first weight matrix is $M \times N$, M is a quantity of rows of the antenna array, and N is a quantity of columns of the antenna array. A first weight element of the first weight matrix corresponds to a first antenna element of the antenna array.

In a possible implementation, the first peak parameter corresponds to the first antenna subarray, and the first configuration information includes at least one of the following: a first peak angle in the first peak parameter, a first peak width in the first peak parameter, a second weight matrix, or a second codeword. The second weight matrix is used to generate the first peak parameter, and the second codeword is used to generate the second weight matrix.

In a possible implementation, a dimension of the second weight matrix is $P \times Q$, P is a quantity of rows of the first antenna subarray, and Q is a quantity of columns of the first antenna subarray. A second weight element of the second weight matrix corresponds to a second antenna element of the first antenna subarray.

In a possible implementation, the second weight matrix includes a third weight matrix and a fourth weight matrix, the third weight matrix is used to generate the first peak angle, and the fourth weight matrix is used to generate the first peak width. A dimension of the third weight matrix, a dimension of the fourth weight matrix, and a dimension of a second weight are the same.

In a possible implementation, a Hadamard product between the third weight matrix and the fourth weight matrix is the second weight matrix.

In a possible implementation, the second codeword includes at least one of the following: a first horizontal angle coefficient, a first horizontal broadening coefficient, a second horizontal broadening coefficient, a first vertical angle coefficient, a first vertical broadening coefficient, or a second vertical broadening coefficient.

In a possible implementation, the third weight matrix, the first horizontal angle coefficient, and the first vertical angle coefficient satisfy: $W_3 = e^{j(A_x \times \mathbf{n_x})} \otimes e^{j(A_y \times \mathbf{n_y})}$. $W_3$ is the third weight matrix, $A_x$ is the first horizontal angle coefficient, $A_y$ is the first vertical angle coefficient, and $\otimes$ is a Kronecker product. $\mathbf{n_x}$ indicates an antenna element index vector of the first antenna subarray in the horizontal direction, and $\mathbf{n_x} = 0, 1, ..., N_x- 1$. $\mathbf{n_y}$ indicates an antenna element index vector of the first antenna subarray in the vertical direction, and $\mathbf{n_y} = 0, 1, ..., N_y- 1$. $N_x$ is a quantity of antenna elements of the first antenna subarray in the horizontal direction, and $N_y$ is a quantity of antenna elements of the first antenna subarray in the vertical direction.

In a possible implementation, the fourth weight matrix, the first horizontal broadening coefficient, the second horizontal broadening coefficient, the first vertical broadening coefficient, and the second vertical broadening coefficient satisfy:

$$W_4 = e^{j\left|B_x \times (2\mathbf{n_x} - (N_x - 1))/(N_x - 1)\right|^{C_x}} \otimes e^{j\left|B_y \times \left(2\mathbf{n_y} - (N_y - 1)\right)/(N_y - 1)\right|^{C_y}}$$

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product. $\mathbf{n_x}$ indicates the antenna element index vector of the first antenna subarray in the horizontal direction, and $\mathbf{n_x} = 0, 1, ... , N_x - 1$. $\mathbf{n_y}$ indicates the antenna element index vector of the first antenna subarray in the vertical direction, and $\mathbf{n_y} = 0, 1, ... , N_y - 1$. $N_x$ is the quantity of antenna elements of the first antenna subarray in the horizontal direction, and $N_y$ is the quantity of antenna elements of the first antenna subarray in the vertical direction.

In a possible implementation, the first peak parameter corresponds to the first antenna subarray. The transceiver unit is further configured to receive second configuration information from the first network device, where the second configuration information includes at least one of index information and antenna element location information of the first antenna subarray.

In a possible implementation, the transceiver unit is further configured to receive indication information from the first network device, where the indication information indicates that the first peak parameter corresponds to the antenna array, or the indication information indicates that the first peak parameter corresponds to the first antenna subarray.

According to a fifth aspect, a communication apparatus is provided, including a processor. The processor is configured to enable, by executing a computer program or instructions or by using a logic circuit, the communication apparatus to perform the method in any one of the first aspect and the possible implementations of the first aspect, or perform the method in any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided, including a logic circuit and an input/output interface. The input/output interface is configured to input and/or output a signal, and the logic circuit is configured to perform the method in any one of the first aspect and the possible implementations of the first aspect, or the logic circuit is configured to perform any one of the second aspect and the possible implementations of the second aspect.

According to a seventh aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to an eighth aspect, a computer program product is provided, including instructions. When the instructions are run on a computer, the method in any one of the first aspect and the possible implementations of the first aspect is performed, or the method in any one of the second aspect and the possible implementations of the second aspect is performed.

**BRIEF DESCRIPTION OF DRAWINGS**

FIG. 1 is a diagram of a communication system 100 to which an embodiment of this application is applicable;
FIG. 2 is a schematic interaction flowchart of a beam generation method 200 according to an embodiment of this application;
FIG. 3 is a diagram of a mapping relationship between a peak parameter and an antenna array of a second network device according to an embodiment of this application;
FIG. 4 is a diagram of a structure of a communication apparatus 400 according to an embodiment of this application;
FIG. 5 is a diagram of a structure of a communication apparatus 500 according to an embodiment of this application;
FIG. 6 is a diagram of a structure of a communication apparatus 600 according to an embodiment of this application; and
FIG. 7 is a diagram of a structure of a communication apparatus 700 according to an embodiment of this application.

**DESCRIPTION OF EMBODIMENTS**

The following describes the technical solutions of this application with reference to the accompanying drawings.
The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, an evolved system after 5G like a 6th generation (6th generation, 6G) system, or a non-terrestrial communication network (non-terrestrial network, NTN) system like an inter-satellite communication system and a satellite communication system. The satellite communication system includes a satellite base station and a terminal device. The satellite base station provides a communication service for the terminal device. The satellite base station may also communicate with a terrestrial base station. A satellite may be used as a base station, or may be used as a terminal device. The satellite may be a non-terrestrial base station, a non-terrestrial device, or the like, for example, an uncrewed aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multipoint transmission may be performed between macro base stations, between micro base stations, and between a macro base station and a micro base station. The technical solutions in embodiments of this application are applicable to an FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in internet of vehicles, communication in internet of things, communication in industrial internet, and the like.

The technical solutions in embodiments of this application may also be applied to a scenario in which the terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which the terminal is connected to at least two base stations.

The technical solutions in embodiments of this application are also applicable to a macro-micro scenario including different forms of base stations in a communication network. For example, the base station may be a satellite, an air balloon station, an uncrewed aerial vehicle station, or the like. The technical solutions in embodiments of this application are also suitable to a scenario in which both a wide-coverage base station and a small-coverage base station exist.

The technical solutions in embodiments of this application may also be applied to 5.5G, 6G, and a later wireless communication system. Applicable scenarios include but are not limited to scenarios such as terrestrial cellular communication, an NTN, satellite communication, and high altitude communication platform (high altitude platform station, HAPS) communication, vehicle-to-everything (vehicle-to-everything, V2X), integrated access and backhaul (integrated access and backhaul, IAB), and IRS communication.

The terminal in embodiments of this application may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital processing (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, an apparatus configured to implement a function of the terminal device may be a terminal device, or may be an apparatus that can support the terminal device in implementing the function, for example, a chip system. The apparatus may be mounted in the terminal device or used with the terminal device in a matching manner. In embodiments of this application, the chip system may include a chip, or may include the chip and another discrete component.

The network device in embodiments of this application is a device having a wireless transceiver function, and is configured to communicate with the terminal device. An access network device may be a node in a radio access network (radio access network, RAN), and may also be referred to as a base station, or may be referred to as a RAN node. The access network device may be an evolved NodeB (evolved NodeB, eNB or eNodeB) in LTE, a base station in a 5G network like a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like.

The network device in embodiments of this application may further include base stations in various forms, for example, a macro base station, a micro base station (also referred to as a small cell), a relay station, a transmission point (transmitting and receiving point, TRP), a transmitting point (transmitting point, TP), a mobile switching center, and a device or the like that undertakes a function of the base station in device-to-device (device-to-device, D2D) communication, vehicle-to-everything (vehicle-to-everything, V2X) communication, and machine-to-machine (machine-to-machine, M2M) communication. The network device may further include a central unit (central unit, CU) and a distributed unit (distributed unit, DU) in a cloud radio access network (cloud radio access network, C-RAN) system, and a network device in an NTN communication system. This is not specifically limited in embodiments of this application.

In embodiments of this application, an apparatus configured to implement a function of the network device may be a network device, or may be an apparatus that can support the network device in implementing the function, for example, a chip system. The apparatus may be mounted in the network device or used with the network device in a matching manner. In embodiments of this application, the chip system may include a chip, or may include the chip and another discrete component.

An IRS in embodiments of this application, for example, a repeater, has a signal forwarding function, and may amplify a signal. In addition, the relay device may also relocate a carrier frequency of a signal, may demodulate a signal, remodulate the signal, and then forward the signal, or may reduce noise of a signal and then forward the signal. Therefore, relay may be in any one of the following forms: amplification and forwarding, demodulation and forwarding, frequency shift and forwarding, and noise reduction and forwarding. In addition, the IRS has another form, which is referred to as a reflector, or referred to as a reflecting surface or another possible name: a reflecting array, an intelligent reflecting array (intelligent reflecting array), a reflector, an intelligent reflector, a backscatter device (backscatter device), a passive device (passive device), a semi-passive device (semi-passive device), or an ambient signal device (ambient signal device). The IRS may also be considered as a special form of terminal device (or network device). The network device may control the IRS to perform more functions for enhancing performance, for example, at least one of IRS transmit power control, IRS amplification gain control, IRS beam sweeping control, IRS precoding control, on/off control, and uplink/downlink forwarding control.

The IRS logically includes a plurality of parts, has one or more of a signal transceiver unit, a controller, a signal amplifier, and the like, and is configured to implement communication and signaling exchange with the network device and the terminal device, signal amplification, and the like. The controller of the IRS is also referred to as a mobile terminal (mobile terminal, MT), a terminal (terminal), or a fixed terminal (fixed terminal, FT). Block diagrams of the other parts may form a radio unit (radio unit, RU) (which may also be referred to as a DU, a distributed radio unit (distributed radio unit, DRU), or the like).

For example, during downlink communication, one signal transceiver unit is configured to receive a signal of the network device, and another signal transceiver unit is configured to forward an amplified received signal to the terminal device. The controller may further communicate with the network device or the terminal device via the signal transceiver unit. For example, the controller communicates with the network device via the signal transceiver unit, is configured to establish a communication link between the IRS and the network device, perform beam alignment, and the like, and may be further configured to receive configuration/indication information of the network device, so that the network device controls working time, a working status, a working manner, or the like of the IRS. Alternatively, the controller is configured to receive a trigger signal of the terminal device, so that the IRS enters a corresponding working mode as needed. For another example, the controller may further determine a working status (for example, an amplification factor or a phase) of the signal amplifier based on indication information of the network device or measurement information of the controller. A quantity of each unit may be one or more. For example, there are a plurality of signal amplifiers, respectively corresponding to different polarization directions or relay radio frequency channels.

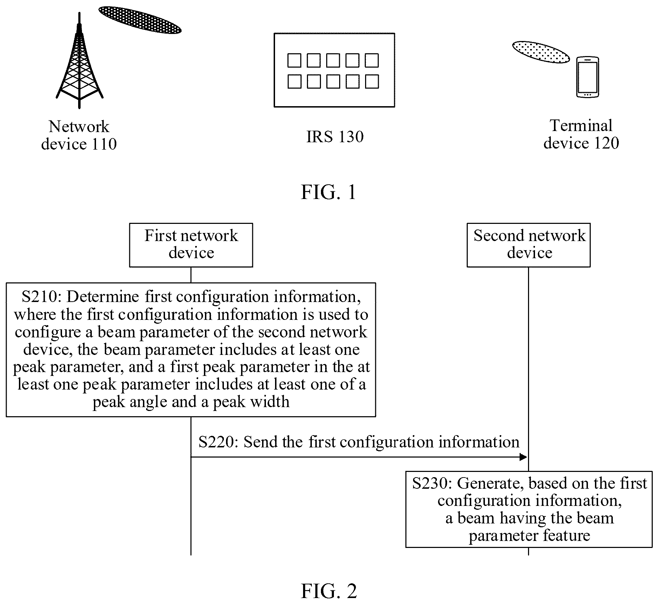

FIG. 1 is a diagram of a communication system 100 to which an embodiment of this application is applicable. As shown in FIG. 1, an IRS 130 includes an antenna panel, and the antenna panel is configured to implement communication with a network device 110 and a terminal device 120. The antenna panel of the IRS 130 may include a plurality of (including two or more) antennas. A single antenna panel may form a beam, and the beam is used to implement communication between the network device 110 and the terminal device 120.

Downlink transmission is used as an example. The network device 110 sends a signal to the IRS 130, and the IRS 130 reflects the signal to the terminal device 120, to establish a signal link between the terminal device 120 and the network device 110. The IRS 130 usually includes a large scale of antennas, and different antennas may reflect a signal differently. A reflecting factor of each antenna is adjusted, so that the IRS 130 can form a narrow beam, and reflect, to the terminal device 120, the signal sent by the network device 110.

It can be learned from the foregoing that the IRS is deployed in a communication coverage hole between the network device 110 and the terminal device 120, so that a coverage rate of the communication coverage hole can be effectively improved. However, because the communication coverage hole between the network device 110 and the terminal device 120 is scattered, wide-range coverage cannot be performed on the communication coverage hole between the network device 110 and the terminal device 120 in a narrow beam generation manner of the IRS. In other words, the existing beam generation manner of the IRS cannot meet a requirement of the IRS on assisting in communication between the network device 110 and the terminal device 120.

Currently, there is a method for generating a wide beam based on an envelope combination of a plurality of narrow beams. However, the method relates to a need of adjusting an amplitude and a phase of a beam. Because the IRS supports only adjustment of the phase of the beam, and does not support adjustment of the amplitude of the beam, the method is not applicable to the IRS.

In view of the foregoing technical problem, this application provides a beam generation method and a communication apparatus, to extend a beam generation manner of a second network device (including the IRS).

It should be noted that, although the IRS is used as an example for description in this application, a scenario to which the technical solutions disclosed in this application can be applied is not limited to the IRS, and the technical solutions may be further applied to an application scenario in which a beam generation manner is limited, for example, a macro base station or a micro base station based on analog beamforming (analog beamforming, ABF) or hybrid beamforming (hybrid beamforming, HBF), or another type of relay used for filling a coverage hole and enhancing coverage. Therefore, in this application, a first network device and the second network device are mainly used as general concepts to describe the technical solutions disclosed in this application. The first network device may be any network device listed above, and the second network device may include the IRS.

The following describes the beam generation method and the communication apparatus according to embodiments of this application with reference to the accompanying drawings.

FIG. 2 is a schematic interaction flowchart of a beam generation method 200 according to an embodiment of this application. The method 200 is performed by a first network device and a second network device, or is performed by modules and/or components (for example, chips or integrated circuits) that are mounted in the first network device and the second network device and that have corresponding functions. This is not limited in this embodiment of this application. The following uses the first network device and the second network device as an example for description. As shown in FIG. 2, the method 200 includes the following steps.

S210: The first network device determines first configuration information, where the first configuration information is used to configure a beam parameter of the second network device, the beam parameter includes at least one peak parameter, and a first peak parameter in the at least one peak parameter includes at least one of a peak angle and a peak width.

Specifically, the first configuration information determined by the first network device is used to configure the beam parameter of the second network device, and the beam parameter can be used by the second network device to perform beam generation. The beam parameter includes the at least one peak parameter, and each of the at least one peak parameter (in this application, the first peak parameter indicates any peak parameter) includes at least one of the peak angle and the peak width.

In S210, a quantity of peak parameters in the at least one peak parameter may indicate a quantity of beams that can be generated by the second network device. For example, one peak parameter corresponds to one beam. When the first configuration information can be used to configure a plurality of peak parameters, it represents that the second network device can generate a plurality of beams. Each of the plurality of beams is in one-to-one correspondence with each of the plurality of peak parameters.

In a possible implementation, the peak angle may include an alternative expression like a beam angle, and the peak width may include an alternative expression like a beam width. In other words, the peak angle (or the beam angle) or the peak width (or the beam width) represents a beam feature, for example, a width of a beam (which may be determined by using $\pm 3$ dB as a standard, or may be determined by using another value as the standard), a direction of the beam, or the like.

In an example, the peak angle parameter may be indicated in a form of a coordinate system. For example, a first angle (theta) and a second angle (phi) in a polar coordinate system are used for indication, or another form of coordinate system, for example, a rectangular coordinate system or a spherical coordinate system, that can be converted into a polar coordinate system may be used for indication.

In an example, the peak width parameter may be indicated in a numerical form. For example, the peak width is 3 dB.

In a possible implementation, an antenna array of the second network device includes at least one antenna subarray (in this application, a first antenna subarray indicates any antenna subarray), and the first peak parameter and the antenna array meet the following relationships:

Relationship #1: The first peak parameter corresponds to the antenna array of the second network device.
Relationship #2: The first peak parameter corresponds to the first antenna subarray of the second network device.

For Relationship #1, there is a mapping relationship between each peak parameter and all antenna elements of the second network device, in other words, the second network device generates a corresponding peak parameter by using all the antenna elements. For example, a 1st peak parameter corresponds to all the antenna elements of the second network device, a 2nd peak parameter also corresponds to all the antenna elements of the second network device, ..., and an Nth peak parameter also corresponds to all the antenna elements of the second network device. For Relationship #2, there is a mapping relationship between one peak parameter and one antenna subarray of the second network device, in other words, the second network device generates a corresponding peak parameter by using an antenna subarray (not all antenna elements). For example, a 1st peak parameter corresponds to a 1st antenna subarray of the second network device, a 2nd peak parameter corresponds to a 2nd antenna subarray of the second network device, ..., and an Nth peak parameter corresponds to an Nth antenna subarray of the second network device.

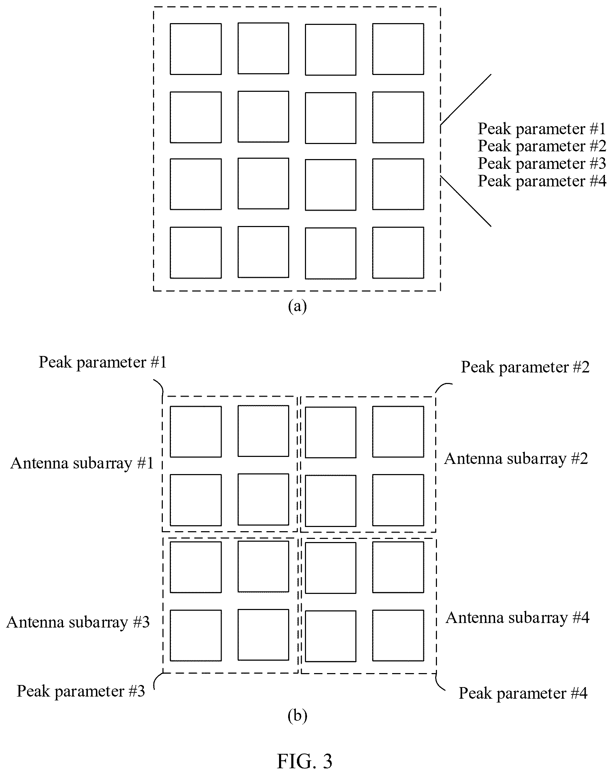

In conclusion, there is a mapping relationship between the first peak parameter in the at least one peak parameter and the antenna array, or there is a mapping relationship between the first peak parameter in the at least one peak parameter and the first antenna subarray. For the mapping relationship between the peak parameter and the antenna array of the second network device, refer to FIG. 3.

FIG. 3 is a diagram of a mapping relationship between a peak parameter and an antenna array of a second network device according to an embodiment of this application. A dimension of the antenna array of the second network device is M (M=16 is used as an example for description)×N (N=16 is used as an example for description), where M is a quantity of rows of the antenna array of the second network device, and N is a quantity of columns of the antenna array of the second network device. The antenna array of the second network device may include four antenna subarrays, and a dimension of each antenna subarray is the same, which is 4×4. There are four peak parameters in the at least one peak parameter: a peak parameter #1, a peak parameter #2, a peak parameter #3, and a peak parameter #4. As shown in (a) in FIG. 3, the peak parameter #1 corresponds to the antenna array, the peak parameter #2 corresponds to the antenna array, the peak parameter #3 corresponds to the antenna array, and the peak parameter #4 corresponds to the antenna array. As shown in (b) in FIG. 3, the peak parameter #1 corresponds to an antenna subarray #1, the peak parameter #2 corresponds to an antenna subarray #2, the peak parameter #3 corresponds to an antenna subarray #3, and the peak parameter #4 corresponds to an antenna subarray #4.

In an example, there is no intersection relationship of antenna elements between antenna subarrays in the at least one antenna subarray, in other words, any antenna element belongs to one antenna subarray and does not belong to two antenna subarrays at the same time.

In an example, antenna elements in the antenna subarray may be arranged in a centralized manner, and an outer contour of the antenna subarray is regular (for example, including a square, a rectangle, or a triangle), or may be irregular (some antenna elements are convex or concave relative to the outer contour of the antenna subarray).

In an example, antenna elements in the antenna subarray may alternatively be dispersedly arranged, and an outer contour of the antenna subarray is regular (including a checkerboard shape or a ring shape), or may be irregular (some antenna elements are convex or concave relative to the outer contour of the antenna subarray).

In an example, antenna elements in the antenna subarray may alternatively be randomly arranged.

Optionally, an outer contour of each antenna subarray may be the same or different.

Optionally, a dimension of each antenna subarray may be the same or different.

In a possible implementation, the first peak parameter corresponds to the antenna array, and the first configuration information includes at least one of the following:
a peak angle in each peak parameter, a peak width in each peak parameter, a first weight matrix, or a first codeword.

Specifically, the first weight matrix is used by the second network device to generate the at least one peak parameter, and the first codeword is used by the second network device to generate the first weight matrix. If the first network device includes the peak angle and/or the peak width in each peak parameter in the first configuration information, the second network device directly performs beam generation based on the peak angle and/or the peak width. If the first network device includes the first weight matrix or the first codeword in the first configuration information, the second network device first generates the at least one peak parameter based on the first weight matrix or the first codeword, and then generates a corresponding beam based on each of the at least one peak parameter.

In an example, a manner of generating the first weight matrix may include algorithms such as particle swarm optimization (particle swarm optimization, PSO) and Gerchberg-Saxton (gerchberg-saxton, GS). For example, in both the PSO algorithm and the GS algorithm, an existing weight matrix (which is a weight matrix that the second network device has, and may be understood as a weight matrix corresponding to a narrow beam generated by the second network device) is optimized by using a minimum value of a difference between an amplitude of a target antenna directivity pattern and an amplitude of an existing antenna directivity pattern as an objective, to obtain the first weight matrix. For content of the PSO algorithm and the GS algorithm, refer to existing descriptions. Details are not described herein.

In an example, when the first configuration information includes the first weight matrix, the first network device may send, to the second network device, a phase value of each antenna element (for the antenna array), a phase difference between the phase of each antenna element and a phase of an antenna element, an index corresponding to the phase of each antenna element, an index corresponding to a phase difference between the phase of each antenna element and a phase of an antenna element, or the like. The second network device determines the peak parameter based on the foregoing information.

In a possible implementation, the first peak parameter corresponds to the first antenna subarray, and the first configuration information includes at least one of the following:

a first peak angle in the first peak parameter, a first peak width in the first peak parameter, a second weight matrix, or a second codeword.

Specifically, the second weight matrix is used by the second network device to generate the first peak parameter. For descriptions of the second weight matrix, refer to the descriptions of the first weight matrix. Details are not described herein again. The second codeword is used by the second network device to generate the second weight matrix. If the first network device includes information such as the peak angle and/or the peak width in the first peak parameter in the first configuration information, the second network device directly performs beam generation based on the peak angle and/or the peak width. If the first network device includes the second weight matrix or the second codeword in the first configuration information, the second network device first generates the first peak parameter based on the second weight matrix or the second codeword, and then generates a corresponding beam based on the first peak parameter.

In an example, when the first configuration information includes the second weight matrix, the first network device may send, to the second network device, a phase of each antenna element in the first antenna subarray, a phase difference between the phase of each antenna element in the first antenna subarray and a phase of an antenna element, an index corresponding to the phase of each antenna element in the first antenna subarray, an index corresponding to a difference between the phase of each antenna element in the first antenna subarray and a phase of an antenna element, or the like. The second network device determines the first peak parameter based on the foregoing information.

Optionally, the first configuration information may further include information such as peak angles and/or peak widths in more peak parameters. This depends on an application requirement.

S220: The first network device sends the first configuration information to the second network device.

Correspondingly, the second network device receives the first configuration information from the first network device.

S230: The second network device generates, based on the first configuration information, a beam having the beam parameter feature.

After receiving the first configuration information sent by the first network device, the second network device generates, based on the first configuration information, the beam having the beam parameter feature.

It can be learned from the foregoing that the first configuration information is used to configure the at least one peak parameter, and the second network device generates the corresponding beam based on each of the at least one peak parameter. When the at least one peak parameter includes a plurality of peak parameters, the second network device may generate a plurality of beams. When the at least one peak parameter includes one peak parameter, the second network device generates one beam. Each of the plurality of beams generated by the second network device may be a narrow beam, or may be a wide beam (with a larger beam width). This depends on a peak width parameter. In addition, when the at least one peak parameter includes the one peak parameter, the beam generated by the second network device based on the first configuration information is a wide beam, and the one peak parameter includes a peak width parameter that can be for generating a larger beam width.

In conclusion, in this application, the second network device performs beam generation based on the first configuration information sent by the first network device. In this way, a beam generation manner of the second network device can be extended.

Specifically, when the second network device is an IRS, the first network device sends a plurality of peak parameters to the IRS, and the IRS may generate a beam with a plurality of peaks. This can help the IRS better cover a communication coverage hole between a network device 110 and a terminal device 120 (increase a coverage rate). Alternatively, the first network device sends, to the IRS, a peak width parameter indicating a larger beam width, and the IRS generates a beam with the larger beam width based on the peak width parameter. This can also help the IRS better cover a communication coverage hole between a network device 110 and a terminal device 120 (increase a coverage rate).

In a possible implementation, the first configuration information includes the first weight matrix, a dimension of the first weight matrix is $M \times N$, M is a quantity of rows of the antenna array, and N is a quantity of columns of the antenna array. Any weight element of the first weight matrix (in this application, the first weight element indicates any weight element of the first weight matrix) corresponds to one antenna element of the antenna array (in this application, the first antenna element indicates any antenna element of the antenna array).

In a possible implementation, the first configuration information includes the second weight matrix, a dimension of the second weight matrix is $P \times Q$, P is a quantity of rows of the first antenna subarray, and Q is a quantity of columns of the first antenna subarray. Any weight element of the second weight matrix (in this application, the second weight element indicates any weight element of the second weight matrix) corresponds to one antenna element of the antenna array (in this application, the second antenna element indicates any antenna element of the first antenna subarray).

It should be understood that the foregoing weight matrix may be expressed in a form of an array, may be expressed in a form of a row and a column, or may be expressed in another form, but there is a mapping relationship between the (first or second) weight element of the (first or second) weight matrix and the antenna array or the antenna element in the first antenna subarray.

In a possible implementation, the second weight matrix includes a third weight matrix and a fourth weight matrix. The third weight matrix is used to generate the first peak angle in the first peak parameter, and the fourth weight matrix is used to generate the first peak width in the first peak parameter. A dimension of the third weight matrix and a dimension of the fourth weight matrix dimension are consistent with the dimension of the second weight matrix, and are also consistent with a dimension of the first antenna subarray. The following further describes the third weight matrix and the fourth weight matrix.

In an example, a Hadamard product between the third weight matrix and the fourth weight matrix is the second weight matrix. In other words, the second weight matrix is an operation result between the third weight matrix and the fourth weight matrix.

In a possible implementation, the second codeword includes at least one of the following:

a first horizontal angle coefficient, a first horizontal broadening coefficient, a second horizontal broadening coefficient, a first vertical angle coefficient, a first vertical broadening coefficient, or a second vertical broadening coefficient.

In an example, there is a specific relationship between the foregoing listed coefficients and the third weight matrix. For example, the third weight matrix, the first horizontal angle coefficient, and the first vertical angle coefficient satisfy:

$$W_3 = e^{j(A_x \times \mathbf{n_x})} \otimes e^{j(A_y \times \mathbf{n_y})} \quad (1)$$

$W_3$ is the third weight matrix, $A_x$ is the first horizontal angle coefficient, $A_y$ is the first vertical angle coefficient, and $\otimes$ is a Kronecker product. $\mathbf{n_x}$ indicates an antenna element index vector of the first antenna subarray in a horizontal direction, and $\mathbf{n_x} = 0, 1, ..., N_x- 1$. $\mathbf{n_y}$ indicates an antenna element index vector of the first antenna subarray in a vertical direction, and $\mathbf{n_y} = 0, 1, ... , N_y- 1$. $N_x$ is a quantity of antenna elements of the first antenna subarray in the horizontal direction, and $N_y$ is a quantity of antenna elements of the first antenna subarray in the vertical direction.

In an example, there is a specific relationship between the foregoing listed coefficients and the fourth weight matrix. For example, the fourth weight matrix, the second horizontal broadening coefficient, the first vertical broadening coefficient, and the second vertical broadening coefficient satisfy:

$$W_4 = e^{j\left|B_x \times \left(2\mathbf{n_x} - (N_x - 1)\right)/(N_x - 1)\right|^{C_x}} \otimes e^{j\left|B_y \times \left(2\mathbf{n_y} - (N_y - 1)\right)/(N_y - 1)\right|^{C_y}} \quad (2)$$

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product. $\mathbf{n_x}$ indicates the antenna element index vector of the first antenna subarray in the horizontal direction, and $\mathbf{n_x} = 0, 1, ... , N_x- 1$. $\mathbf{n_y}$ indicates the antenna element index vector of the first antenna subarray in the vertical direction, and $\mathbf{n_y} = 0, 1, ..., N_y- 1$. $N_x$ is the quantity of antenna elements of the first antenna subarray in the horizontal direction, and $N_y$ is the quantity of antenna elements of the first antenna subarray in the vertical direction.

In a possible implementation, the first peak parameter corresponds to the first antenna subarray. The first network device sends second configuration information to the second network device, where the second configuration information includes at least one of index information and antenna element location information of the first antenna subarray. In this way, the second network device may determine, based on the index information and/or the antenna element location information, a location of the first antenna subarray corresponding to the first peak parameter, to better generate the beam.

In an example, the first network device may send, to the second network device, a difference (which may include a difference in the vertical direction and a difference in the horizontal direction) between an index of any antenna element in the first antenna subarray and an index of an antenna element in the complete array, a difference between an index of a specific antenna element in the first antenna subarray and an index of an antenna element in the complete array and a difference between an index of another antenna element in the first antenna subarray and the index of the specific antenna element, or a difference between the index of the specific antenna element in the first antenna subarray and an index of an antenna element in the complete array and a direction of another antenna element in the first antenna subarray relative to the specific antenna element.

It can be learned from the foregoing that there are two mapping relationships between the first peak parameter and the antenna array. The first network device may send indication information to the second network device, where the indication information indicates, to the second network device, that the first peak parameter corresponds to the antenna array, or the indication information indicates, to the second network device, that the first peak parameter corresponds to the first antenna subarray. In this way, the second network device determines a type of the mapping relationship between the first peak parameter and the antenna array, to better perform beam generation.

The following further describes the third weight matrix and the fourth weight matrix.

Optionally, the third weight matrix may be a discrete Fourier transform (discrete fourier transform, DFT) weight matrix, or may be a weight matrix of another type. This is not limited in this application.

For ease of description, in this application, an example in which the third weight matrix is the DFT weight matrix and a dimension of the antenna array is 2×2 is used for description.

For ease of description, the following uses an example in which the third weight matrix corresponds to the complete antenna array for description. However, the description is also applicable to a scenario in which the third weight matrix corresponds to an antenna subarray. Unified descriptions are provided herein, and details are not described below again. The description is also applicable to descriptions of the fourth weight matrix.

In an example, the third weight matrix is represented as:

$$W_3 = e^{j\frac{2\pi d_x}{\lambda}\beta_x \mathbf{n_x}} \otimes e^{j\frac{2\pi d_y}{\lambda}\beta_y \mathbf{n_y}}, \ \beta_x \in [-1,1], \ \beta_y \in [-1,1],$$

$$\mathbf{n_x} = 0, \dots, N_X-1, \mathbf{n_y} = 0, \dots, N_Y-1 \ (3)$$

x and y respectively indicate the horizontal direction and the vertical direction. $d_x$ represents a horizontal-direction spacing between adjacent antenna elements, and $d_y$ represents a vertical-direction spacing between adjacent antenna elements. $\mathbf{n_x}$ represents a horizontal-direction index vector of an antenna element, and $\mathbf{n_y}$ represents a vertical-direction index vector of the antenna element. $\frac{2\pi d_x}{\lambda}\beta_x$ represents a horizontal-direction phase difference between adjacent antenna elements, and $\frac{2\pi d_y}{\lambda}\beta_y$ represents a vertical-direction phase difference between adjacent antenna elements. $\lambda$ represents a wavelength. $\beta_x = \sin\theta\cos\varphi$, and $\beta_y = \sin\theta\sin\varphi$, where $\theta$ and $\varphi$ are peak pointing angles.

For ease of description, in this application, both $d_y$ and $d_x$ are 0.5 times the wavelength, and Formula (3) is represented as:

$$W_3 = e^{j\pi\beta_x \mathbf{n_x}} \otimes e^{j\pi\beta_y \mathbf{n_y}}, \ \beta_x \in [-1,1], \ \beta_y \in [-1,1],$$

$$\mathbf{n_x} = 0, \dots, N_X-1, \mathbf{n_y} = 0, \dots, N_Y-1 \ (4)$$

It can be learned with reference to the dimension 2×2 of the antenna array that the antenna array of the second network device includes four antenna elements: an antenna element 1 (1, 1), an antenna element 2 (1, 2), an antenna element 3 (2, 1), and an antenna element 4 (2, 2). Therefore, $N_x = 2$, and $N_y = 2$. Correspondingly, values of $\mathbf{n_x}$ include 0 and 1, and values of $\mathbf{n_y}$ include 0 and 1.

It can be learned with reference to the dimension 2×2 of the antenna array that Formula (4) is represented as:

$$W_3 = \begin{pmatrix} W_{3,1,1} & W_{3,1,2} \\ W_{3,2,1} & W_{3,2,2} \end{pmatrix} \ (5)$$

$W_{3,1,2} = e^{j\Phi 10,1} = e^{j\pi\beta_x*0} * e^{j\pi\beta_y*1}$. For descriptions of $W_{3,1,1}$, $W_{3,2,1}$, and $W_{3,2,2}$, refer to the descriptions of $W_{3,1,2}$. Details are not described herein again. $W_{3,1,2}$ may represent a weight element.

In addition, the descriptions of Formula (3) to Formula (5) are applicable to descriptions of Formula (1). Details are not described herein again.

In an example, the fourth weight matrix is represented as:

$$W_4 = e^{j\left|\frac{2\pi d_x}{\lambda} \times c_x \times \frac{2\mathbf{n_x}-(N_X-1)}{N_X-1}\right|^{\mathbf{k_x}}} \otimes e^{j\left|\frac{2\pi d_x}{\lambda} \times c_y \times \frac{2\mathbf{n_y}-(N_Y-1)}{N_Y-1}\right|^{\mathbf{k_y}}},$$

$$\mathbf{n_x} = 0, \dots, N_X-1, \mathbf{n_y} = 0, \dots, N_Y-1 \ (6)$$

For ease of description, in this application, both $d_y$ and $d_x$ are 0.5 times the wavelength, and Formula (6) is represented as:

$$W_4 = e^{j\left|\pi \times c_x \times \frac{2n_x-(N_X-1)}{N_X-1}\right|^{k_x}} \otimes e^{j\left|\pi \times c_y \times \frac{2n_y-(N_Y-1)}{N_Y-1}\right|^{k_y}},$$

$$n_x = 0, \dots, N_X-1, \, n_y = 0, \dots, N_Y-1 \quad (7)$$

It can be learned with reference to the dimension $2 \times 2$ of the antenna array that Formula (7) is:

$$W_4 = \begin{pmatrix} W_{4,1,1} & W_{4,1,2} \\ W_{4,2,1} & W_{4,2,2} \end{pmatrix} \quad (8)$$

$W_{4,1,2} = e^{j\Phi 1_{0,1}} = e^{j|-\pi \times c_x|^{k_x}} * e^{j|\pi \times c_y|^{k_y}}$. For descriptions of $W_{4,1,1}, W_{4,2,1}$, and $W_{4,2,2}$, refer to the descriptions of $W_{4,1,2}$. Details are not described herein again. $W_{4,1,2}$ represents a weight element.

In Formula (6), $c_x$ and $c_y$ are respectively used to control a maximum value in the horizontal direction and a maximum value in the vertical direction. $k_x$ and $k_y$ are respectively used to control a curvature in the horizontal direction and a curvature in the vertical direction. $c_x$, $c_y$, $k_x$, and $k_y$ may be considered as core parameters used to adjust the beam feature. The second network device can adjust a beam width of a beam based on the at least one parameter.

Because $n_x$ and $n_y$ may be considered as the horizontal-direction index vector and the vertical-direction index vector of the antenna element, Formula (6) may be considered as an overall expression of all antenna elements participating in a beam generation process.

Specifically, the second network device can determine the second weight matrix based on the third weight matrix and the fourth weight matrix. The second weight matrix is:

$$W_2 = W_3 \odot W_4 =$$

$$\begin{pmatrix} W_{3,1,1} & W_{3,1,2} \\ W_{3,2,1} & W_{3,2,2} \end{pmatrix} \odot \begin{pmatrix} W_{4,1,1} & W_{4,1,2} \\ W_{4,2,1} & W_{4,2,2} \end{pmatrix} \quad (9)$$

$\odot$ represents a matrix operation manner between the third weight matrix and the fourth weight matrix. Optionally, $\odot$ is a Hadamard product.

In addition, the descriptions of Formula (6) to Formula (9) are applicable to descriptions of Formula (2). Details are not described herein again.

According to the foregoing technical solution, this application supports the second network device in generating a wide beam.

It should be understood that, when each antenna subarray corresponds to one beam, interference may exist between adjacent beams. Therefore, a proper weight matrix may be designed to avoid the interference between adjacent beams.

For example, the antenna array of the second network device is deployed on an XOY plane, and generates, in the horizontal direction, m beams which have same transmit power and whose emergent angles are respectively $(\theta_1, \varphi_1)$, $(\theta_2, \varphi_2)$, ..., and $(\theta_m, \varphi_m)$.

For ease of description, in this embodiment of this application, an example in which the dimension of the antenna array of the second network device is $4 \times 4$, the dimension of each antenna subarray is $2 \times 4$, and m=2 is used for description.

In an example, the third weight matrix is represented as:

$$W_{3,m} = e^{j\frac{2\pi d_x}{\lambda}\beta_{x,m}n_x} \otimes e^{j\frac{2\pi d_y}{\lambda}\beta_y n_y} = e^{j\frac{2\pi d_x}{\lambda}(\sin\theta_m \cos\varphi_m)n_x} \otimes e^{j\frac{2\pi d_y}{\lambda}(\sin\theta_m \sin\varphi_m)n_y},$$

$$n_x = 0, \dots, (N_X/m)-1, \, n_y = 0, \dots, N_Y-1 \quad (10)$$

For ease of description, in this application, an example in which both $d_y$ and $d_x$ are 0.5 times the wavelength is used for description, and a variation of Formula (10) is:

$$W_{3,m} = e^{j\pi\beta_{x,m}\mathbf{n_x}} \otimes e^{j\pi\beta_y\mathbf{n_y}} = e^{j\pi(\sin\theta_m\cos\varphi_m)\mathbf{n_x}} \otimes e^{j\pi(\sin\theta_m\sin\varphi_m)\mathbf{n_y}},$$

$$\mathbf{n_x} = 0, \ldots, (N_X/m)-1, \quad \mathbf{n_y} = 0, \ldots, N_Y-1 \quad (11)$$

Specifically, the second network device generates two beams in the horizontal direction, and Formula (10) is separately represented as:

$$W_{3,1} = e^{j\pi(\sin\theta_1\cos\varphi_1)n_x} \otimes e^{j\pi(\sin\theta_1\sin\varphi_1)n_y}, \mathbf{n_x} = 0, \ldots, 1, \quad \mathbf{n_y} = 0, \ldots 1 \quad (12)$$

$$W_{3,2} = e^{j\pi(\sin\theta_2\cos\varphi_2)n_x} \otimes e^{j\pi(\sin\theta_2\sin\varphi_2)n_y}, \mathbf{n_x} = 0, \ldots, 1, \quad \mathbf{n_y} = 0, \ldots, 1 \quad (13)$$

$W_3=(W_{3,1}\ W_{3,2})$ is the third weight matrix. The second network device generates the two beams in the horizontal direction, and there is interference between the two beams. Therefore, the interference between the two beams needs to be overcome. The first network device generates the fourth weight matrix, and the second network device determines the second weight matrix based on the fourth weight matrix and the third weight matrix. In this way, the interference between adjacent beams can be overcome.

It should be understood that the two beams generated in the horizontal direction by the second network device respectively correspond to the first antenna subarray and the second antenna subarray in the antenna array. The dimension of the first antenna subarray is $2\times4$, and a dimension of the second antenna subarray is $2\times4$. For example, the first antenna subarray is first two rows of subarrays in the antenna array of the second network device, and the second subarray is last two rows of subarrays in the antenna array of the second network device.

In an example, the fourth weight matrix is represented as:

$$W_{4,m} = \begin{cases} e^{j\Phi_{3,1nx,ny}} = e^{j0} & m = 1 \\ e^{j\Phi_{3,mnx,ny}} = e^{j(\sum_2^m \frac{2\pi d_x}{\lambda}(\sin\theta x_{m-1})\frac{N_x}{m}+\sum_2^m\frac{2\pi d_x}{\lambda}\left(\frac{\sin(\theta x_{m-1})+\sin(\theta x_m)}{2}\right)+\sum_2^m\pi)} & m \geq 2 \end{cases} \quad (14)$$

For ease of description, in this application, an example in which both $d_y$ and $d_x$ are 0.5 times the wavelength is used for description, and a variation of Formula (15) is:

$$W_{4,m} = \begin{cases} e^{j\Phi_{3,1nx,ny}} = e^{j0} & m = 1 \\ e^{j(\sum_2^m \pi(\sin\theta x_{m-1})\frac{N_x}{m}+\sum_2^m\pi\left(\frac{\sin(\theta x_{m-1})+\sin(\theta x_m)}{2}\right)+\sum_2^m\pi)} & m \geq 2 \end{cases} \quad (15)$$

It can be learned from the foregoing that, when m=2, a variation of Formula (16) is:

$$W_{4,2} = \begin{cases} e^{j0} \\ e^{j(\pi(\sin\theta x_1)2+\pi\left(\frac{\sin(\theta x_1)+\sin(\theta x_2)}{2}\right)+\pi)} \end{cases} \quad (16)$$

Specifically, when m≥2, values of all elements in a submatrix $W_{4,m}$ in the fourth weight matrix are a same constant, and different values of the constant are related to a value of m. For example, when m=2, there are two values of $W_{4,m}$. For example, when m=1, all elements in the fourth weight matrix are $e^{j0}$; or when m=2, all elements in the fourth weight matrix are

$$e^{j(\pi(\sin\theta x_1)\frac{4}{2}+\pi\left(\frac{\sin(\theta x_1)+\sin(\theta x_2)}{2}\right)+\pi)}. \quad \sin\theta_{x1} = \sin\theta_1\cos\varphi_1, \text{ and } \sin\theta_{x2} = \sin\theta_2\cos\varphi_2.$$

$$W_2 = W_3 \odot W_4 = (W_{3,1} \quad W_{3,2}) \odot (W_{4,1} \quad W_{4,2}) \quad (17)$$

Specifically, $W_{4,1}$ indicates a submatrix of the fourth weight matrix $W_4$ corresponding to a 1st beam, $W_{3,1}$ indicates a submatrix of the third weight matrix $W_3$ of the 1st beam, $W_{4,2}$ indicates a submatrix of the fourth weight matrix $W_4$ corresponding to a 2nd beam, and $W_{3,2}$ indicates a submatrix of the third weight matrix $W_3$ corresponding to the 2nd beam. The second weight matrix $W_2$ may be obtained by performing a Hadamard product $\odot$ on $W_3$ and $W_4$.

It should be noted that the foregoing describes the technical solution in which the second network device generates a plurality of beams in the horizontal direction. However, the second network device may alternatively generate a plurality of beams in both the horizontal direction and the vertical direction. For details, refer to the following descriptions.

For example, the antenna array of the second network device is deployed on an XOY plane, generates, in the horizontal direction, m beams which have same transmit power and whose emergent angles are respectively $(\theta_1, \varphi_q)$, $(\theta_2, \varphi_q)$, ..., and $(\theta_m, \varphi_q)$, and generates, in the vertical direction, n beams which have same transmit power and whose emergent angles are respectively $(\theta_p, \varphi_1)$, $(\theta_p, \varphi_2)$, ..., and $(\theta_p, \varphi_n)$. In addition, p = 1, ... , m, and q = 1, ..., n.

Emergent angles of beams meet the following relationship:

$$\theta_{t_1} \neq \theta_{t_2} \neq \cdots \neq \theta_{t_k}, \text{ where } \theta_{t_1}, \theta_{t_2}, \dots, \theta_{t_k} \text{ are monotonous, } t \in \{x, y\},$$

$$\sin \theta_x = \sin \theta \cos \varphi, \text{ and } \sin \theta_y = \sin \theta \sin \varphi \quad (18)$$

$$W_4 = W_5 \odot W_6 = \begin{pmatrix} W_{5,1,1} & \cdots & W_{5,1,n} \\ \vdots & \ddots & \vdots \\ W_{5,m,1} & \cdots & W_{5,m,n,} \end{pmatrix} \odot \begin{pmatrix} W_{6,1,1} & \cdots & W_{6,1,n} \\ \vdots & \ddots & \vdots \\ W_{6,m,1} & \cdots & W_{6,m,n,} \end{pmatrix} \quad (19)$$

$$W_{5,p,q} = \begin{cases} e^{j\Phi_{5,p,q_{n_x,n_y}}} = e^{j0} & p = q = 1 \\ e^{j\Phi_{5,p,q_{n_x,n_y}}} = e^{j\left(\Sigma_2^p \frac{2\pi d_x}{\lambda}(\sin\theta x_{p-1})\frac{N_x}{m} + \Sigma_2^p \frac{2\pi d_x}{\lambda}\left(\frac{\sin(\theta x_{p-1})+\sin(\theta x_p)}{2}\right)+\Sigma_2^p \pi\right)} & p \geq 2 \\ e^{j\Phi_{5,p,q_{n_x,n_y}}} = e^{j\left(\Sigma_2^q \frac{2\pi d_y}{\lambda}(\sin\theta y_{q-1})\frac{N_y}{n} + \Sigma_2^q \frac{2\pi d_y}{\lambda}\left(\frac{\sin(\theta y_{q-1})+\sin(\theta y_q)}{2}\right)+\Sigma_2^q \pi\right)} & q \geq 2 \end{cases},$$

$$n_x = 0, \dots, \frac{N_X}{m} - 1, \quad n_y = 0, \dots, \frac{N_Y}{n} - 1 \quad (20)$$

When both the horizontal-direction spacing and the vertical-direction spacing between adjacent antenna elements are 0.5 times the wavelength, Formula (20) is:

$$W_{5,p,q} = \begin{cases} e^{j0} & p = q = 1 \\ e^{j\Phi_{5,p,q_{n_x,n_y}}} = e^{j\left(\Sigma_2^p \pi(\sin\theta x_{p-1})\frac{N_x}{m} + \Sigma_2^p \pi\left(\frac{\sin(\theta x_{p-1})+\sin(\theta x_p)}{2}\right)+\Sigma_2^p \pi\right)} & p \geq 2 \\ e^{j\Phi_{5,p,q_{n_x,n_y}}} = e^{j\left(\Sigma_2^q \pi(\sin\theta y_{q-1})\frac{N_y}{n} + \Sigma_2^q \pi\left(\frac{\sin(\theta y_{q-1})+\sin(\theta y_q)}{2}\right)+\Sigma_2^q \pi\right)} & q \geq 2 \end{cases},$$

$$n_x = 0, \dots, (N_X/m) - 1, \quad n_y = 0, \dots, (N_Y/n) - 1 \quad (21)$$

For descriptions of Formula (21), refer to the foregoing descriptions. Details are not described herein again.

According to the foregoing technical solution, this application supports the second network device in generating a plurality of beams, and a degree of interference between adjacent beams can be effectively reduced.

The foregoing describes the method embodiment in embodiments of this application, and the following describes corresponding apparatus embodiments.

To implement the foregoing functions in the method provided in embodiments of this application, a terminal and a network device may each include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

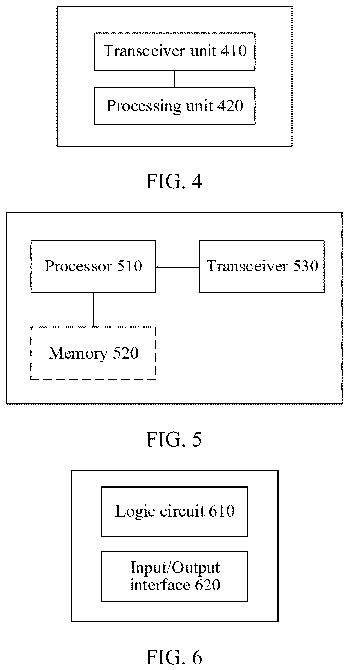

FIG. 4 is a block diagram of a communication apparatus 400 according to an embodiment of this application. The communication apparatus 400 includes a processor 410 and a communication interface 420. The processor 410 and the communication interface 420 may be connected to each other through a bus 430. The communication apparatus 400 may be configured to implement a function of a first network device, or may be configured to implement a function of a second network device.

Optionally, the communication apparatus 400 further includes a memory 440.

The memory 440 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can carry or store expected program code in a form of an instruction structure or a data structure and that can be accessed by a computer, but is not limited herein. For example, the memory 440 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform each method, step, and logical block diagram disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. For example, the processor 410 may be one or more central processing units (central processing units, CPUs). When the processor 410 is one CPU, the CPU may be a single-core CPU or a multicore CPU.

When the communication apparatus 400 is configured to implement the function of the first network device, for example, the processor 410 is configured to perform the following operations: determining first configuration information, and sending the first configuration information to the second network device. For another example, the following operation may be performed: sending second configuration information to the second network device. For another example, the following operation may be performed: sending indication information to the second network device.

The foregoing content is merely used as an example for description. When the communication apparatus 400 is configured to implement the function of the first network device, the communication apparatus 400 is responsible for performing a method or a step related to the first network device in the foregoing method embodiment.

When the communication apparatus 400 is configured to implement the function of the second network device, for example, the processor 410 is configured to perform the following operation: receiving first configuration information from the first network device. For another example, the following operation may be performed: receiving second configuration information from the first network device.

The foregoing content is merely used as an example for description. When the communication apparatus 400 is configured to implement the function of the second network device, the communication apparatus 400 is responsible for performing a method or a step related to the second network device in the foregoing method embodiment.

The foregoing descriptions are merely an example for description. For specific content, refer to the content shown in the foregoing method embodiment. In addition, for an implementation of each operation in FIG. 4, refer to corresponding descriptions in the method embodiment shown in FIG. 2.

FIG. 5 is a block diagram of a communication apparatus 500 according to an embodiment of this application. The communication apparatus 500 may be a network device in the foregoing embodiments, or may be a chip or a module in the network device, and is configured to implement the method in the foregoing embodiments. The communication apparatus 500 includes a transceiver unit 510 and a processing unit 520. The following describes the transceiver unit 510 and the processing unit 520 by using examples.

The transceiver unit 510 may include a sending unit and a receiving unit that are respectively configured to implement a sending function or a receiving function in the foregoing method embodiment. The transceiver unit 510 may further include a processing unit, configured to implement a function other than the sending function or the receiving function.

When the communication apparatus 500 is configured to implement a function of a first network device, for example, the transceiver unit 510 is configured to send first configuration information to a second network device, and the processing unit 520 is configured to determine the first configuration information.

Optionally, the communication apparatus 500 further includes a storage unit 530, and the storage unit 530 is configured to store a program or code used to perform the foregoing method.

The foregoing content is merely used as an example for description. When the communication apparatus 500 is configured to implement the first network device, the communication apparatus 500 is responsible for performing a method or a step related to the first network device in the foregoing method embodiment.

When the communication apparatus 500 is a second network device, for example, the transceiver unit 510 is configured to receive first configuration information from a first network device.

Optionally, the communication apparatus 500 further includes a storage unit 530, and the storage unit 530 is configured to store a program or code used to perform the foregoing method.

The foregoing content is merely used as an example for description. When the communication apparatus 500 is configured to implement the second network device, the communication apparatus 500 is responsible for performing a method or a step related to the second network device in the foregoing method embodiment.

In addition, for an implementation of each operation in FIG. 5, refer to corresponding descriptions of content shown in the foregoing method embodiment. Details are not described herein again.

The communication apparatuses shown in FIG. 4 and FIG. 5 are configured to implement the content described in the foregoing method embodiment. Therefore, for specific execution steps and methods of the communication apparatuses shown in FIG. 4 and FIG. 5, refer to the content described in the foregoing method embodiment.

It should be understood that the transceiver unit may include the sending unit and the receiving unit. The sending unit is configured to perform a sending action of the communication apparatus, and the receiving unit is configured to perform a receiving action of the communication apparatus. For ease of description, in embodiments of this application, the sending unit and the receiving unit are combined into a transceiver unit. Unified descriptions are provided herein, and details are not described below again.

FIG. 6 is a diagram of a communication apparatus 600 according to an embodiment of this application. The communication apparatus 600 may be configured to implement a function of the network device 110, a network device 120, or a core network element 130 in the foregoing method. The communication apparatus 600 may be a chip in the network device 110, the network device 120, or the core network element 130. The communication apparatus 600 includes an input/output interface 620 and a processor 610. The input/output interface 620 may be an input/output circuit. The processor 610 may be a signal processor, a chip, or another integrated circuit that can implement the method in this application. The input/output interface 620 is configured to input or output a signal or data.

For example, if the communication apparatus 600 is a first network device, the input/output interface 620 is configured to send first configuration information to a second network device, and the processor 610 is configured to determine the first configuration information. The processor 610 is further configured to perform some or all steps of any method provided in this application.

For example, if the communication apparatus 600 is a second network device, the input/output interface 620 is configured to receive first configuration information from a first network device.

In a possible implementation, the processor 610 executes instructions stored in a memory, to implement a function implemented by the network device 110 or the terminal device 120.

Optionally, the communication apparatus 600 further includes the memory. Optionally, the processor and the memory are integrated together. Optionally, the memory is outside the communication apparatus 600.

In a possible implementation, the processor 610 may be a logic circuit, and the processor 610 inputs/outputs a message or signaling through the input/output interface 620. The logic circuit may be a signal processor, a chip, or another integrated circuit that can implement the method in embodiments of this application.

The foregoing descriptions of the communication apparatus 600 in FIG. 6 are merely an example for description. The communication apparatus 600 can be configured to perform the method in the foregoing embodiments. For specific content, refer to the descriptions of the foregoing method embodiment. Details are not described herein again.

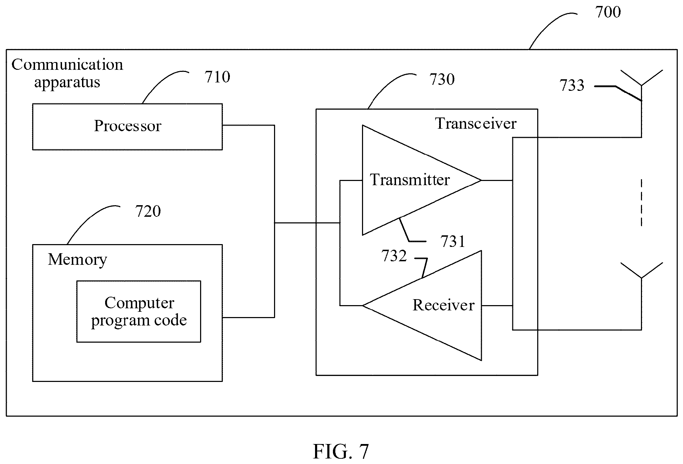

FIG. 7 is a block diagram of a communication apparatus 700 according to an embodiment of this application. The communication apparatus 700 may be a network device or a chip. The communication apparatus 700 may be configured to perform an operation performed by the network device in the foregoing method embodiment.

When the communication apparatus 700 is the network device, for example, a base station, FIG. 7 is a simplified diagram of a structure of the base station. The base station includes a part 710, a part 720, and a part 730. The part 710 is mainly configured to: perform baseband processing, control the base station, and the like. The part 710 is usually a control center of the base station, may be usually referred to as a processor, and is configured to control the base station to perform a processing operation on a network device side in the foregoing method embodiment. The part 720 is mainly configured to store computer program code and data. The part 730 is mainly configured to receive and send a radio frequency signal and perform conversion between a radio frequency signal and a baseband signal. The part 730 may be usually referred to as a transceiver module, a transceiver machine, a transceiver circuit, a transceiver, or the like. The transceiver module in the part 730 may also be referred to as the transceiver machine, the transceiver, or the like, and includes an antenna 733 and a radio frequency circuit (not shown in the figure). The radio frequency circuit is mainly configured to perform radio frequency processing. Optionally, in the part 730, a component configured to implement a receiving function may be considered as a receiver, and a component configured to implement a sending function may be considered as a transmitter. In other words, the part 730 includes a receiver 732 and a transmitter 731. The receiver may also be referred to as a receiving module, a receiver machine, a receiver circuit, or the like, and the transmitter may be referred to as a transmitting module, a transmitter machine, a transmitter circuit, or the like.

The part 710 and the part 720 may include one or more boards, and each board may include one or more processors and one or more memories. The processor is configured to read and execute a program in the memory, to implement a baseband processing function and control the base station. If there are a plurality of boards, the boards may be interconnected to enhance a processing capability. In an optional implementation, the plurality of boards may share one or more processors, the plurality of boards may share one or more memories, or the plurality of boards may simultaneously share one or more processors.

In an implementation, the transceiver module in the part 730 is configured to perform a sending/receiving-related process performed by the network device in the embodiment shown in FIG. 2. The processor in the part 710 is configured to perform a processing-related process performed by the network device in the embodiment shown in FIG. 2.

In another implementation, the processor in the part 710 is configured to perform a processing-related process performed by the communication device in the embodiment shown in FIG. 2.

In another implementation, the transceiver module in the part 730 is configured to perform a sending/receiving-related process performed by the communication device in the embodiment shown in FIG. 2.

It should be understood that FIG. 7 is merely an example rather than a limitation. The network device including the processor, the memory, and the transceiver may not depend on the structures shown in FIG. 4 to FIG. 6.

When the communication apparatus 700 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiment may be understood as output of the chip, and a receiving operation performed by the network device in the foregoing method embodiment may be understood as input of the chip.

This application further provides a chip, including a processor. The processor is configured to invoke, from a memory, instructions stored in the memory and run the instructions, to enable a communication device on which the chip is mounted to perform the method in the foregoing examples.

This application further provides another chip, including an input interface, an output interface, and a processor. The input interface, the output interface, and the processor are connected through an internal connection path. The processor is configured to execute code in a memory. When the code is executed, the processor is configured to perform the method in the foregoing examples. Optionally, the chip further includes the memory. The memory is configured to store a computer program or code.

This application further provides a processor, configured to be coupled to a memory, to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program runs on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

This application further provides a communication system. The communication system includes a network device 110, a network device 120, and a core network element. The network device 110 is configured to perform the foregoing method, the network device 120 is configured to perform the foregoing method, and the core network element 130 is configured to perform the foregoing method. For specific descriptions, refer to the foregoing descriptions. Details are not described herein again.

In the descriptions of embodiments of this application, unless otherwise specified, "a plurality of" means two or more. "At least one of the following items (pieces)" or an expression similar thereto means any combination of these items, including a singular item (piece) or any combination of plural items (pieces). For example, at least one of a, b, or c may represent: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence, and the terms such as "first" and "second" do not indicate a definite difference. In addition, in embodiments of this application, the word like "example" or "for example" represents giving an example, an illustration, or a description.

Unless otherwise specified, "/" in the descriptions of embodiments of this application represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A and B may be singular or plural.

Sequence numbers of the foregoing processes do not mean an execution sequence in various embodiments of this application. The execution sequence of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and the electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for specific working processes of the foregoing systems, apparatuses, and units, refer to corresponding processes in the foregoing method embodiment. Details are not described herein again.

In several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. A part or all of the units may be selected based on an actual requirement to achieve objectives of the solutions in the embodiments.

In addition, functional units in embodiments of this application may be integrated into one processing unit, or each unit may exist alone physically, or two or more units may be integrated into one unit.

When the functions are implemented in a form of a software functional unit and sold or used as an independent product, the functions may be stored in a computer-readable storage medium. Based on this understanding, the technical solutions in embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

Mutual reference may be made to content in embodiments of this application. Unless otherwise stated or there is a logical conflict, terms and/or descriptions in different embodiments are consistent and may be mutually referenced, and technical features in different embodiments may be combined based on an internal logical relationship thereof, to form a new embodiment.

It may be understood that, in embodiments of this application, the terminal device, the access network device, or the core network device may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

**Claims**

1. A beam generation method, wherein the method is applied to a first network device side, and the method comprises:

    determining first configuration information, wherein the first configuration information is used to configure a beam parameter of a second network device, the beam parameter comprises at least one peak parameter, and a first peak parameter in the at least one peak parameter comprises at least one of a peak angle and a peak width; and
    sending the first configuration information to the second network device.

2. The method according to claim 1, wherein an antenna array of the second network device comprises at least one antenna subarray; and

    the first peak parameter corresponds to the antenna array; or
    the first peak parameter corresponds to a first antenna subarray in the at least one antenna subarray.

3. The method according to claim 2, wherein the first peak parameter corresponds to the antenna array, and the first configuration information comprises at least one of the following:

    a peak angle in each of the at least one peak parameter, a peak width in each peak parameter, a first weight matrix, or a first codeword, wherein
    the first weight matrix is used to generate the at least one peak parameter, and the first codeword is used to generate the first weight matrix.

4. The method according to claim 3, wherein a dimension of the first weight matrix is M×N, M is a quantity of rows of the antenna array, and N is a quantity of columns of the antenna array; and
a first weight element of the first weight matrix corresponds to a first antenna element of the antenna array.

5. The method according to claim 2, wherein the first peak parameter corresponds to the first antenna subarray, and the first configuration information comprises at least one of the following:

a first peak angle in the first peak parameter, a first peak width in the first peak parameter, a second weight matrix, or a second codeword, wherein
the second weight matrix is used to generate the first peak parameter, and the second codeword is used to generate the second weight matrix.

6. The method according to claim 5, wherein a dimension of the second weight matrix is P×Q, P is a quantity of rows of the first antenna subarray, and Q is a quantity of columns of the first antenna subarray; and
a second weight element of the second weight matrix corresponds to a second antenna element of the first antenna subarray.

7. The method according to claim 5 or 6, wherein

the second weight matrix comprises a third weight matrix and a fourth weight matrix, the third weight matrix is used to generate the first peak angle, and the fourth weight matrix is used to generate the first peak width; and
a dimension of the third weight matrix, a dimension of the fourth weight matrix, and a dimension of the second weight are the same.

8. The method according to claim 7, wherein a Hadamard product between the third weight matrix and the fourth weight matrix is the second weight matrix.

9. The method according to any one of claims 5 to 8, wherein the second codeword comprises at least one of the following:
a first horizontal angle coefficient, a first horizontal broadening coefficient, a second horizontal broadening coefficient, a first vertical angle coefficient, a first vertical broadening coefficient, or a second vertical broadening coefficient.

10. The method according to claim 9, wherein the third weight matrix, the first horizontal angle coefficient, and the first vertical angle coefficient satisfy:

$$W_3 = e^{j(A_x \times \mathbf{n_x})} \otimes e^{j(A_y \times \mathbf{n_y})},$$

wherein

$W_3$ is the third weight matrix, $A_x$ is the first horizontal angle coefficient, $A_y$ is the first vertical angle coefficient, and $\otimes$ is a Kronecker product;
$\mathbf{n_x}$ indicates an antenna element index vector of the first antenna subarray in a horizontal direction, and $\mathbf{n_x} = 0, 1, \dots, N_x - 1$;
$\mathbf{n_y}$ indicates an antenna element index vector of the first antenna subarray in a vertical direction, and $\mathbf{n_y} = 0, 1, \dots, N_y - 1$; and
$N_x$ is a quantity of antenna elements of the first antenna subarray in the horizontal direction, and $N_y$ is a quantity of antenna elements of the first antenna subarray in the vertical direction.

11. The method according to claim 9 or 10, wherein the fourth weight matrix, the first horizontal broadening coefficient, the second horizontal broadening coefficient, the first vertical broadening coefficient, and the second vertical broadening coefficient satisfy:

$$W_4 = e^{j|B_x \times (2\mathbf{n_x} - (N_x-1))/(N_x-1)|^{C_x}} \otimes e^{j|B_y \times (2\mathbf{n_y} - (N_y-1))/(N_y-1)|^{C_y}},$$

wherein

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product;

$\mathbf{n_x}$ indicates the antenna element index vector of the first antenna subarray in the horizontal direction, and $\mathbf{n_x}$ = 0,1, ... , $N_x$- 1;

$\mathbf{n_y}$ indicates the antenna element index vector of the first antenna subarray in the vertical direction, and $\mathbf{n_y}$ = 0, 1, ..., $N_y$- 1; and

$N_x$ is the quantity of antenna elements of the first antenna subarray in the horizontal direction, and $N_y$ is the quantity of antenna elements of the first antenna subarray in the vertical direction.

12. The method according to any one of claims 2 to 11, wherein the first peak parameter corresponds to the first antenna subarray, and the method further comprises:

sending second configuration information to the second network device, wherein the second configuration information comprises at least one of index information and antenna element location information of the first antenna subarray.

13. The method according to any one of claims 2 to 12, wherein the method further comprises:

sending indication information to the second network device, wherein
the indication information indicates that the first peak parameter corresponds to the antenna array; or
the indication information indicates that the first peak parameter corresponds to the first antenna subarray.

14. A beam generation method, wherein the method is applied to a second network device side, and the method comprises:

receiving first configuration information from a first network device, wherein the first configuration information is used to configure a beam parameter of the second network device, the beam parameter comprises at least one peak parameter, and a first peak parameter in the at least one peak parameter comprises at least one of a peak angle and a peak width; and
generating, based on the first configuration information, a beam having the beam parameter feature.

15. The method according to claim 14, wherein an antenna array of the second network device comprises at least one antenna subarray; and

the first peak parameter corresponds to the antenna array; or
the first peak parameter corresponds to a first antenna subarray in the at least one antenna subarray.

16. The method according to claim 15, wherein the first peak parameter corresponds to the antenna array, and the first configuration information comprises at least one of the following:

a peak angle in each of the at least one peak parameter, a peak width in each peak parameter, a first weight matrix, or a first codeword, wherein
the first weight matrix is used to generate the at least one peak parameter, and the first codeword is used to generate the first weight matrix.

17. The method according to claim 16, wherein a dimension of the first weight matrix is M×N, M is a quantity of rows of the antenna array, and N is a quantity of columns of the antenna array; and

a first weight element of the first weight matrix corresponds to a first antenna element of the antenna array.

18. The method according to claim 15, wherein the first peak parameter corresponds to the first antenna subarray, and the first configuration information comprises at least one of the following:

a first peak angle in the first peak parameter, a first peak width in the first peak parameter, a second weight matrix, or a second codeword, wherein
the second weight matrix is used to generate the first peak parameter, and the second codeword is used to generate the second weight matrix.

**19.** The method according to claim 18, wherein a dimension of the second weight matrix is P×Q, P is a quantity of rows of the first antenna subarray, and Q is a quantity of columns of the first antenna subarray; and
a second weight element of the second weight matrix corresponds to a second antenna element of the first antenna subarray.

**20.** The method according to claim 18 or 19, wherein

the second weight matrix comprises a third weight matrix and a fourth weight matrix, the third weight matrix is used to generate the first peak angle, and the fourth weight matrix is used to generate the first peak width; and
a dimension of the third weight matrix, a dimension of the fourth weight matrix, and a dimension of the second weight are the same.

**21.** The method according to claim 20, wherein a Hadamard product between the third weight matrix and the fourth weight matrix is the second weight matrix.

**22.** The method according to any one of claims 18 to 21, wherein the second codeword comprises at least one of the following:
a first horizontal angle coefficient, a first horizontal broadening coefficient, a second horizontal broadening coefficient, a first vertical angle coefficient, a first vertical broadening coefficient, or a second vertical broadening coefficient.

**23.** The method according to claim 22, wherein the third weight matrix, the first horizontal angle coefficient, and the first vertical angle coefficient satisfy:

$$W_3 = e^{j(A_x \times \mathbf{n_x})} \otimes e^{j(A_y \times \mathbf{n_y})},$$

wherein

$W_3$ is the third weight matrix, $A_x$ is the first horizontal angle coefficient, $A_y$ is the first vertical angle coefficient, and $\otimes$ is a Kronecker product;
$\mathbf{n_x}$ indicates an antenna element index vector of the first antenna subarray in a horizontal direction, and $\mathbf{n_x} = 0, 1, ..., N_x - 1$;
$\mathbf{n_y}$ indicates an antenna element index vector of the first antenna subarray in a vertical direction, and $\mathbf{n_y} = 0, 1, ..., N_y - 1$; and
$N_x$ is a quantity of antenna elements of the first antenna subarray in the horizontal direction, and $N_y$ is a quantity of antenna elements of the first antenna subarray in the vertical direction.

**24.** The method according to claim 22 or 23, wherein the fourth weight matrix, the first horizontal broadening coefficient, the second horizontal broadening coefficient, the first vertical broadening coefficient, and the second vertical broadening coefficient satisfy:

$$W_4 = e^{j\left|B_x \times \left(2\mathbf{n_x} - (N_x - 1)\right)/(N_x - 1)\right|^{C_x}} \otimes e^{j\left|B_y \times \left(2\mathbf{n_y} - (N_y - 1)\right)/(N_y - 1)\right|^{C_y}},$$

wherein

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product;
$\mathbf{n_x}$ indicates the antenna element index vector of the first antenna subarray in the horizontal direction, and $\mathbf{n_x} = 0, 1, ..., N_x - 1$;
$\mathbf{n_y}$ indicates the antenna element index vector of the first antenna subarray in the vertical direction, and $\mathbf{n_y} = 0, 1, ..., N_y - 1$; and
$N_x$ is the quantity of antenna elements of the first antenna subarray in the horizontal direction, and $N_y$ is the quantity of antenna elements of the first antenna subarray in the vertical direction.

**25.** The method according to any one of claims 15 to 24, wherein the first peak parameter corresponds to the first antenna subarray, and the method further comprises:
receiving second configuration information from the first network device, wherein the second configuration information comprises at least one of index information and antenna element location information of the first antenna subarray.

26. The method according to any one of claims 15 to 25, wherein the method further comprises:

receiving indication information from the first network device, wherein
the indication information indicates that the first peak parameter corresponds to the antenna array; or
the indication information indicates that the first peak parameter corresponds to the first antenna subarray.

27. A communication apparatus, comprising:

a processing unit, configured to determine first configuration information, wherein the first configuration information is used to configure a beam parameter of a second network device, the beam parameter comprises at least one peak parameter, and a first peak parameter in the at least one peak parameter comprises at least one of a peak angle and a peak width; and
a transceiver unit, configured to send the first configuration information to the second network device.

28. The apparatus according to claim 27, wherein an antenna array of the second network device comprises at least one antenna subarray; and

the first peak parameter corresponds to the antenna array; or
the first peak parameter corresponds to a first antenna subarray in the at least one antenna subarray.

29. The apparatus according to claim 28, wherein the first peak parameter corresponds to the antenna array, and the first configuration information comprises at least one of the following:

a peak angle in each of the at least one peak parameter, a peak width in each peak parameter, a first weight matrix, or a first codeword, wherein
the first weight matrix is used to generate the at least one peak parameter, and the first codeword is used to generate the first weight matrix.

30. The apparatus according to claim 29, wherein a dimension of the first weight matrix is $M{\times}N$, M is a quantity of rows of the antenna array, and N is a quantity of columns of the antenna array; and
a first weight element of the first weight matrix corresponds to a first antenna element of the antenna array.

31. The apparatus according to claim 28, wherein the first peak parameter corresponds to the first antenna subarray, and the first configuration information comprises at least one of the following:

a first peak angle in the first peak parameter, a first peak width in the first peak parameter, a second weight matrix, or a second codeword, wherein
the second weight matrix is used to generate the first peak parameter, and the second codeword is used to generate the second weight matrix.

32. The apparatus according to claim 31, wherein a dimension of the second weight matrix is $P{\times}Q$, P is a quantity of rows of the first antenna subarray, and Q is a quantity of columns of the first antenna subarray; and
a second weight element of the second weight matrix corresponds to a second antenna element of the first antenna subarray.

33. The apparatus according to claim 31 or 32, wherein

the second weight matrix comprises a third weight matrix and a fourth weight matrix, the third weight matrix is used to generate the first peak angle, and the fourth weight matrix is used to generate the first peak width; and
a dimension of the third weight matrix, a dimension of the fourth weight matrix, and a dimension of the second weight are the same.

34. The apparatus according to claim 33, wherein a Hadamard product between the third weight matrix and the fourth weight matrix is the second weight matrix.

35. The apparatus according to any one of claims 31 to 34, wherein the second codeword comprises at least one of the following:
a first horizontal angle coefficient, a first horizontal broadening coefficient, a second horizontal broadening coefficient, a first vertical angle coefficient, a first vertical broadening coefficient, or a second vertical broadening coefficient.

36. The apparatus according to claim 35, wherein the third weight matrix, the first horizontal angle coefficient, and the first vertical angle coefficient satisfy:

$$W_3 = e^{j(A_x \times \mathbf{n_x})} \otimes e^{j(A_y \times \mathbf{n_y})},$$

wherein

$W_3$ is the third weight matrix, $A_x$ is the first horizontal angle coefficient, $A_y$ is the first vertical angle coefficient, and $\otimes$ is a Kronecker product;
$\mathbf{n_x}$ indicates an antenna element index vector of the first antenna subarray in a horizontal direction, and $\mathbf{n_x} = 0, 1, ... , N_x - 1$;
$\mathbf{n_y}$ indicates an antenna element index vector of the first antenna subarray in a vertical direction, and $\mathbf{n_y} = 0, 1, ..., N_y - 1$; and
$N_x$ is a quantity of antenna elements of the first antenna subarray in the horizontal direction, and $N_y$ is a quantity of antenna elements of the first antenna subarray in the vertical direction.

37. The apparatus according to claim 35 or 36, wherein the fourth weight matrix, the first horizontal broadening coefficient, the second horizontal broadening coefficient, the first vertical broadening coefficient, and the second vertical broadening coefficient satisfy:

$$W_4 = e^{j\left|B_x \times \left(2\mathbf{n_x} - (N_x-1)\right)/(N_x-1)\right|^{C_x}} \otimes e^{j\left|B_y \times \left(2\mathbf{n_y} - (N_y-1)\right)/(N_y-1)\right|^{C_y}},$$

wherein

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product;
$\mathbf{n_x}$ indicates the antenna element index vector of the first antenna subarray in the horizontal direction, and $\mathbf{n_x} = 0, 1, ... , N_x - 1$;
$\mathbf{n_y}$ indicates the antenna element index vector of the first antenna subarray in the vertical direction, and $\mathbf{n_y} = 0, 1, ..., N_y - 1$; and
$N_x$ is the quantity of antenna elements of the first antenna subarray in the horizontal direction, and $N_y$ is the quantity of antenna elements of the first antenna subarray in the vertical direction.

38. The apparatus according to any one of claims 28 to 37, wherein the first peak parameter corresponds to the first antenna subarray; and

the transceiver unit is further configured to send second configuration information to the second network device, wherein
the second configuration information comprises at least one of index information and antenna element location information of the first antenna subarray.

39. The apparatus according to any one of claims 28 to 38, wherein the transceiver unit is further configured to send indication information to the second network device, wherein

the indication information indicates that the first peak parameter corresponds to the antenna array; or
the indication information indicates that the first peak parameter corresponds to the first antenna subarray.

40. A communication apparatus, comprising:

   a transceiver unit, configured to receive first configuration information from a first network device, wherein the first configuration information is used to configure a beam parameter of the communication apparatus, the beam parameter comprises at least one peak parameter, and a first peak parameter in the at least one peak parameter comprises at least one of a peak angle and a peak width; and
   a processing unit, configured to generate, based on the first configuration information, a beam having the beam parameter feature.

41. The apparatus according to claim 40, wherein an antenna array of the communication apparatus comprises at least one antenna subarray; and

   the first peak parameter corresponds to the antenna array; or
   the first peak parameter corresponds to a first antenna subarray in the at least one antenna subarray.

42. The apparatus according to claim 41, wherein the first peak parameter corresponds to the antenna array, and the first configuration information comprises at least one of the following:

   a peak angle in each of the at least one peak parameter, a peak width in each peak parameter, a first weight matrix, or a first codeword, wherein
   the first weight matrix is used to generate the at least one peak parameter, and the first codeword is used to generate the first weight matrix.

43. The apparatus according to claim 42, wherein a dimension of the first weight matrix is M×N, M is a quantity of rows of the antenna array, and N is a quantity of columns of the antenna array; and
   a first weight element of the first weight matrix corresponds to a first antenna element of the antenna array.

44. The apparatus according to claim 41, wherein the first peak parameter corresponds to the first antenna subarray, and the first configuration information comprises at least one of the following:

   a first peak angle in the first peak parameter, a first peak width in the first peak parameter, a second weight matrix, or a second codeword, wherein
   the second weight matrix is used to generate the first peak parameter, and the second codeword is used to generate the second weight matrix.

45. The apparatus according to claim 44, wherein a dimension of the second weight matrix is P×Q, P is a quantity of rows of the first antenna subarray, and Q is a quantity of columns of the first antenna subarray; and
   a second weight element of the second weight matrix corresponds to a second antenna element of the first antenna subarray.

46. The apparatus according to claim 44 or 45, wherein the second weight matrix comprises a third weight matrix and a fourth weight matrix, wherein

   the third weight matrix is used to generate the first peak angle, and the fourth weight matrix is used to generate the first peak width; and
   a dimension of the third weight matrix, a dimension of the fourth weight matrix, and a dimension of the second weight are the same.

47. The apparatus according to claim 46, wherein a Hadamard product between the third weight matrix and the fourth weight matrix is the second weight matrix.

48. The apparatus according to any one of claims 44 to 47, wherein the second codeword comprises at least one of the following:
   a first horizontal angle coefficient, a first horizontal broadening coefficient, a second horizontal broadening coefficient, a first vertical angle coefficient, a first vertical broadening coefficient, or a second vertical broadening coefficient.

49. The apparatus according to claim 48, wherein the third weight matrix, the first horizontal angle coefficient, and the first vertical angle coefficient satisfy:

$$W_3 = e^{j(A_x \times \mathbf{n_x})} \otimes e^{j(A_y \times \mathbf{n_y})},$$

wherein

$W_3$ is the third weight matrix, $A_x$ is the first horizontal angle coefficient, $A_y$ is the first vertical angle coefficient, and $\otimes$ is a Kronecker product;

$\mathbf{n_x}$ indicates an antenna element index vector of the first antenna subarray in a horizontal direction, and $\mathbf{n_x} = 0, 1, \ldots, N_x\text{-} 1$;

$\mathbf{n_y}$ indicates an antenna element index vector of the first antenna subarray in a vertical direction, and $\mathbf{n_y} = 0, 1, \ldots, N_y\text{-} 1$; and

$N_x$ is a quantity of antenna elements of the first antenna subarray in the horizontal direction, and $N_y$ is a quantity of antenna elements of the first antenna subarray in the vertical direction.

50. The apparatus according to claim 48 or 49, wherein the fourth weight matrix, the first horizontal broadening coefficient, the second horizontal broadening coefficient, the first vertical broadening coefficient, and the second vertical broadening coefficient satisfy:

$$W_4 = e^{j\left|B_x \times (2\mathbf{n_x} - (N_x-1))/(N_x-1)\right|^{C_x}} \otimes e^{j\left|B_y \times (2\mathbf{n_y} - (N_y-1))/(N_y-1)\right|^{C_y}},$$

wherein

$W_4$ is the fourth weight matrix, $B_x$ is the first horizontal broadening coefficient, $B_y$ is the first vertical broadening coefficient, $C_x$ is the second horizontal broadening coefficient, $C_y$ is the second vertical broadening coefficient, and $\otimes$ is a Kronecker product;

$\mathbf{n_x}$ indicates the antenna element index vector of the first antenna subarray in the horizontal direction, and $\mathbf{n_x} = 0, 1, \ldots, N_x\text{-} 1$;

$\mathbf{n_y}$ indicates the antenna element index vector of the first antenna subarray in the vertical direction, and $\mathbf{n_y} = 0, 1, \ldots, N_y\text{-} 1$; and

$N_x$ is the quantity of antenna elements of the first antenna subarray in the horizontal direction, and $N_y$ is the quantity of antenna elements of the first antenna subarray in the vertical direction.

51. The apparatus according to any one of claims 41 to 50, wherein the first peak parameter corresponds to the first antenna subarray; and

the transceiver unit is further configured to receive second configuration information from the first network device, wherein

the second configuration information comprises at least one of index information and antenna element location information of the first antenna subarray.

52. The apparatus according to any one of claims 41 to 51, wherein the transceiver unit is further configured to receive indication information from the first network device, wherein

the indication information indicates that the first peak parameter corresponds to the antenna array; or
the indication information indicates that the first peak parameter corresponds to the first antenna subarray.

53. A communication apparatus, comprising a processor, wherein the processor is configured to enable, by executing a computer program or instructions or by using a logic circuit, the communication apparatus to perform the method according to any one of claims 1 to 26.

54. The communication apparatus according to claim 53, wherein the communication apparatus further comprises a memory, and the memory is configured to store the computer program or the instructions.

55. The communication apparatus according to claim 53 or 54, wherein the communication apparatus further comprises a communication interface, and the communication interface is configured to input and/or output a signal.

**56.** A communication apparatus, comprising a logic circuit and an input/output interface, wherein the input/output interface is configured to input and/or output a signal; and
the logic circuit is configured to perform the method according to any one of claims 1 to 26.

**57.** A computer-readable storage medium, wherein the computer-readable storage medium stores a computer program or instructions; and
when the computer program or the instructions are run on a computer, the method according to any one of claims 1 to 26 is performed.

**58.** A computer program product, comprising instructions, wherein when the instructions are run on a computer, the method according to any one of claims 1 to 26 is performed.

Network
device 110

IRS 130

Terminal
device 120

FIG. 1

First network
device

Second network
device

S210: Determine first configuration information,
where the first configuration information is used to
configure a beam parameter of the second network
device, the beam parameter includes at least one
peak parameter, and a first peak parameter in the at
least one peak parameter includes at least one of a
peak angle and a peak width

S220: Send the first configuration information

S230: Generate, based on the first
configuration information,
a beam having the beam
parameter feature

FIG. 2

Peak parameter #1
Peak parameter #2
Peak parameter #3
Peak parameter #4

(a)

Peak parameter #1

Peak parameter #2

Antenna subarray #1

Antenna subarray #2

Antenna subarray #3

Antenna subarray #4

Peak parameter #3

Peak parameter #4

(b)

FIG. 3

Transceiver unit 410

Processing unit 420

FIG. 4

Processor 510

Transceiver 530

Memory 520

FIG. 5

Logic circuit 610

Input/Output
interface 620

FIG. 6

FIG. 7

## INTERNATIONAL SEARCH REPORT

| International application No. |
|---|
| **PCT/CN2023/132673** |

| A. | CLASSIFICATION OF SUBJECT MATTER |
|---|---|

H04B7/06(2006.01)i;  H04W16/28(2009.01)i

According to International Patent Classification (IPC) or to both national classification and IPC

| B. | FIELDS SEARCHED |
|---|---|

Minimum documentation searched (classification system followed by classification symbols)

IPC: H04B; H04W

Documentation searched other than minimum documentation to the extent that such documents are included in the fields searched

Electronic data base consulted during the international search (name of data base and, where practicable, search terms used)

CNTXT; CNKI; ENTXTC; DWPI; 3GPP; IEEE: 中继, 智能表面, 智能反射面, 可配置, 可重配, 表面, 波束, 峰值, 宽度, 方向, 角度, 朝向, 指示, intelligent reflection, configurable, surface, beam, peak, angle, width, direction, orientation, indicate, IRS, RIS

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022113809 A1 (SONY GROUP CORPORATION) 02 June 2022 (2022-06-02) description, paragraphs 149-226 and 326-327 | 1, 14, 27, 40, 53-58 |
| A | WO 2022028292 A1 (VIVO MOBILE COMMUNICATION CO., LTD.) 10 February 2022 (2022-02-10) entire document | 1-58 |
| A | US 2022014935 A1 (HUAWEI TECHNOLOGIES CO., LTD. et al.) 13 January 2022 (2022-01-13) entire document | 1-58 |
| A | CN 114520699 A (CHONGQING UNIVERSITY OF POSTS AND TELECOMMUNICATIONS) 20 May 2022 (2022-05-20) entire document | 1-58 |
| A | US 2022077919 A1 (QUALCOMM IINCORPORATED) 10 March 2022 (2022-03-10) entire document | 1-58 |
| A | WO 2022096095 A1 (HUAWEI TECHNOLOGIES CO., LTD. et al.) 12 May 2022 (2022-05-12) entire document | 1-58 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 January 2024** | **05 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/132673**

| Patent document cited in search report | | | Publication date (day/month/year) | Patent family member(s) | | | Publication date (day/month/year) |
|---|---|---|---|---|---|---|---|
| WO | 2022113809 | A1 | 02 June 2022 | CN | 116472733 | A | 21 July 2023 |
| WO | 2022028292 | A1 | 10 February 2022 | KR | 20230047161 | A | 06 April 2023 |
| | | | | EP | 4191896 | A1 | 07 June 2023 |
| | | | | US | 2023179277 | A1 | 08 June 2023 |
| | | | | JP | 2023536485 | A | 25 August 2023 |
| | | | | CN | 114070370 | A | 18 February 2022 |
| US | 2022014935 | A1 | 13 January 2022 | WO | 2022007417 | A1 | 13 January 2022 |
| | | | | US | 11570629 | B2 | 31 January 2023 |
| | | | | CN | 115804180 | A | 14 March 2023 |
| CN | 114520699 | A | 20 May 2022 | None | | | |
| US | 2022077919 | A1 | 10 March 2022 | WO | 2022055943 | A1 | 17 March 2022 |
| | | | | EP | 4211855 | A1 | 19 July 2023 |
| | | | | US | 11558102 | B2 | 17 January 2023 |
| | | | | CN | 116057845 | A | 02 May 2023 |
| WO | 2022096095 | A1 | 12 May 2022 | EP | 4197111 | A1 | 21 June 2023 |
| | | | | CN | 116458078 | A | 18 July 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211457120